# EUROPEAN PATENT APPLICATION

(11) **EP 3 564 030 A1**
(43) Date of publication of application: **06.11.2019**
(21) Application number: 17889370.7
(22) Date of filing: 25.12.2017
(51) Int. Cl.: B32B 17/10, B32B 37/14, B60J 1/00, B60R 11/02, C03C 17/32, C03C 27/12

(54) **GLASS PLATE PRODUCTION METHOD AND AUTOMOTIVE GLASS PLATE**

(30) Priority: 28.12.2016 JP 2016256907
(71) Applicant: Nippon Sheet Glass Company, Limited, Tokyo 108-6321 (JP); TOPPAN INFOMEDIA CO., LTD., Tokyo 1080023 (JP)
(72) Inventor: TERANISHI, Toyoyuki, Tokyo 108-6321 (JP); OYA, Kazuaki, Tokyo 108-6321 (JP); UTSUGI, Itaru, Tokyo 1080023 (JP); OKADA, Tomoyuki, Tokyo 1080023 (JP)
(74) Representative: Mewburn Ellis LLP
(86) International application number: PCT/JP2017/046272
(87) International publication number: WO 2018/123916

(57) **Abstract**

A method for manufacturing a glass plate according to one aspect of the present invention includes a first step of preparing a glass plate, a second step of preparing an antifog film that includes a film substrate having a thickness of no greater than 100 µm, an antifog layer having antifog properties and layered on one surface of the film substrate, and an adhesive layer layered on another surface of the film substrate, and a third step of attaching the antifog film to the glass plate via the adhesive layer.

## Description

### Technical Field

The present invention relates to a method for manufacturing a glass plate and a glass plate for automobiles.

### Background Art

If one surface of a glass plate that is used as a windshield for automobiles or the like is exposed to a higher temperature and a higher humidity than the other surface, the one surface may fog up. In the case of a windshield for automobiles, for example, if the inside temperature of a vehicle increases while the vehicle is driving in a cold place, the surface of the windshield on the vehicle interior side may fog up. Recent years have seen glass plates that have an antifog function (for example, Patent Literature 1) in order to suppress such fogging.

Patent Literature 1 proposes windshields provided with various antifog means. For example, a method is proposed for forming an antifog coating on a windshield, and a method is proposed for attaching, to a windshield, an antifog film that includes a film substrate and an antifog layer formed on the film substrate to impart the antifog function to the windshield.

Out of these methods, the method using an antifog film is advantageous for the following reason. That is, if an antifog layer is formed using a relatively soft material, for example, scratches are likely to be formed in the antifog layer. If scratches are formed in the antifog layer, antifog properties cannot be exhibited where the scratches are formed and the antifog function is impaired.

However, even if scratches are formed in the antifog layer, the antifog function can be restored according to the method using an antifog film by disposing of the antifog film having scratches and attaching a new antifog film. Therefore, the method using an antifog film is advantageous in that the antifog function imparted to the glass plate can be easily maintained.

### Citation List

### Patent Literature

Patent Literature 1: WO 2016/129699

### Summary of Invention

### Technical Problem

The inventors of the present invention found that the following problem may occur if the method using an antifog film for imparting the antifog function to a glass plate is employed. That is, the antifog film includes an adhesive layer that is layered on a surface of the film substrate opposite to the antifog layer, and the antifog film is attached to the glass plate via the adhesive layer. Specifically, the antifog film is attached to the glass plate while being pressed against the glass plate using a squeegee or the like. At this time, even if the adhesive layer is formed with a uniform thickness, the thickness of the adhesive layer may become uneven due to compressive stress that acts on the adhesive layer during pressing because the adhesive layer is soft. Furthermore, if a release sheet is attached to the adhesive layer, the thickness of the adhesive layer may also become uneven due to a shear force that acts on the adhesive layer when the release sheet is removed. If the thickness of the adhesive layer becomes uneven for these reasons, the antifog film will be attached to the glass pate in a distorted state. Also, strain may occur in the film substrate during formation of the antifog layer. The inventors of the present invention found that, when the antifog film is attached to a glass plate, perspective distortion may occur for these reasons in a portion where the antifog film is attached.

In one aspect, the present invention was made under the above circumstances, and the object thereof is to provide technology that suppresses perspective distortion that may occur in a glass plate to which an antifog film is attached.

### Solution to Problem

To solve the above problem, the present invention employs the following configuration.

That is, a method for manufacturing a glass plate according to one aspect of the present invention includes a first step of preparing a glass plate, a second step of preparing an antifog film that includes a film substrate having a thickness of no greater than 100 µm, an antifog layer having antifog properties and layered on one surface of the film substrate, and an adhesive layer layered on another surface of the film substrate, and a third step of attaching the antifog film to the glass plate via the adhesive layer.

The higher the rigidity of an antifog film is, the easier it is to hold the antifog film and attach the antifog film to the glass plate. Therefore, thick film substrates are used in conventional antifog films. However, if a thick film substrate is used, the path of light passing through the film substrate increases, and the influence of distortion of the antifog film increases. The inventors of the present invention found that, if a conventional antifog film is used, perspective distortion may occur for the above reason in a portion where the antifog film is attached.

Therefore, an antifog film that includes a relatively thin film substrate having a thickness of no greater than 100 µm is used in the above configuration. As a result, the path of light passing through the film substrate can be shortened and the influence of distortion of the antifog film can be reduced. Therefore, according to the above configuration, perspective distortion that may occur in a glass plate to which the antifog film is attached can be suppressed.

As another form of the method for manufacturing a glass plate according to the above aspect, the thickness of the film substrate may be no greater than 50 µm. According to this configuration, the path of light passing through the film substrate can be further shortened and, consequently, perspective distortion that may occur in a glass plate to which the antifog film is attached can be further suppressed.

As another form of the method for manufacturing a glass plate according to the above aspect, the adhesive layer may have a thickness of no greater than 100 µm, preferably no greater than 50 µm, and further preferably no greater than 30 µm. The adhesiveness of the antifog film to the glass plate increases as the thickness of the adhesive layer increases. However, if the thickness of the adhesive layer is increased, the antifog film will be largely distorted when the thickness of the adhesive layer becomes uneven, and severe perspective distortion occurs in the glass plate to which the antifog film is attached. In contrast, distortion of the antifog film caused by an uneven thickness of the adhesive layer can be suppressed according to this configuration as a result of the adhesive layer having a thickness of no greater than 100 µm. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, a loss tangent tanδ of dynamic viscoelasticity of the adhesive layer at 25°C may be no greater than 0.5. According to this configuration, the thickness of the adhesive layer is unlikely to become uneven when the antifog film is attached as a result of the adhesive layer having a loss tangent tanδ of dynamic viscoelasticity at 25°C of no greater than 0.5. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, a loss tangent tanδ of dynamic viscoelasticity of the adhesive layer at 25°C may be greater than 0.5. If the loss tangent tanδ of dynamic viscoelasticity of the adhesive layer at 25°C is greater than 0.5, the adhesive layer is likely to plastically deform, and therefore the above-described perspective distortion is likely to occur as a result of the thickness of the adhesive layer becoming uneven when the antifog film is attached. However, perspective distortion that may occur in the glass plate to which the antifog film is attached can be suppressed with the above configuration as a result of the thickness of the film substrate being reduced to reduce the influence of distortion of the antifog film. Therefore, if the above configuration is employed to suppress perspective distortion that may occur in the glass plate to which the antifog film is attached, excellent effects can be exhibited in a case where an antifog film that includes an adhesive layer having a loss tangent tanδ of dynamic viscoelasticity at 25°C of greater than 0.5 is used.

As another form of the method for manufacturing a glass plate according to the above aspect, the adhesive layer may contain a substance that has a molecular weight of no greater than a million. If an adhesive layer that contains a substance having a molecular weight of no greater than a million, in particular, no greater than 500,000, is employed according to this configuration, the adhesive layer is likely to plastically deform, and therefore the above-described perspective distortion is likely to occur as a result of the thickness of the adhesive layer becoming uneven when the antifog film is attached. However, perspective distortion that may occur in the glass plate to which the antifog film is attached can be suppressed with the above configuration as a result of the thickness of the film substrate being reduced to reduce the influence of distortion of the antifog film. Therefore, if the above configuration is employed to suppress perspective distortion that may occur in the glass plate to which the antifog film is attached, excellent effects can be exhibited in a case where an adhesive layer that contains a substance having a molecular weight of no greater than a million, in particular, no greater than 500,000, is employed.

As another form of the method for manufacturing a glass plate according to the above aspect, the adhesive layer may contain a substance that has a molecular weight of greater than a million. According to this configuration, the thickness of the adhesive layer is unlikely to become uneven when the antifog film is attached as a result of the adhesive layer containing a substance that has a molecular weight of greater than a million. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, a release sheet may be attached to the adhesive layer, a protective film may be attached to the antifog layer, and, in the third step, the antifog film may be attached to the glass plate after the release sheet is removed from the adhesive layer with the protective film remaining attached to the antifog layer. The antifog layer is sometimes formed by applying a coating solution that contains an antifog material onto the film substrate and drying the applied coating solution. In such a case, internal stress may be generated when a solvent contained in the coating solution evaporates and the film substrate may curl. In particular, the thickness of the film substrate is small in this configuration, and therefore the film substrate is likely to curl because of the internal stress. Accordingly, when the release sheet attached to the adhesive layer is removed to attach the antifog film to the glass plate, the film substrate may curl and it may become difficult to accurately attach the antifog film to the glass plate. However, according to this configuration, the antifog film is attached to the glass plate after the release sheet is removed from the adhesive layer with the protective film remaining attached to the antifog layer. That is, the protective film can keep the film substrate from curling when the release sheet is removed to attach the antifog film to the glass plate. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, the protective film may have a larger thickness than the film substrate has, and the method may further include a fourth step of removing the protective film after the third step. It is generally preferable that the protective film is thin because it is to be disposed of. However, in the above configuration, the thickness of the film substrate is reduced, and accordingly the rigidity of the entire antifog film is reduced and it may be difficult to attach the antifog film to the glass plate. That is, if the film substrate is thin, the entire antifog film has low rigidity and the antifog film is likely to deform when it is attached, and the antifog film may be attached to the glass plate in a state where creases are formed in the antifog film. However, the rigidity of the antifog film including the protective film can be increased according to this configuration as a result of the thickness of the protective film being set larger than the thickness of the film substrate. Therefore, according to this configuration, the antifog film can be easily attached to the glass plate while perspective distortion that may occur in the glass plate to which the antifog film is attached is suppressed.

As another form of the method for manufacturing a glass plate according to the above aspect, dimensions of the protective film in plan view may be larger than dimensions of the antifog film in plan view. According to this configuration, the protective film extends from the antifog film in plan view, and therefore the protective film can be easily removed from the antifog film. This can enhance workability of the manufacturing process.

As another form of the method for manufacturing a glass plate according to the above aspect, dimensions of the release sheet in plan view may be larger than dimensions of the antifog film in plan view. According to this configuration, the release sheet extends from the antifog film in plan view, and therefore the release sheet can be easily removed from the antifog film. This can enhance workability of the manufacturing process.

As another form of the method for manufacturing a glass plate according to the above aspect, the release sheet may have a silicone layer on a front surface thereof. In this configuration, the release sheet can be easily removed from the adhesive layer as a result of the silicone layer being provided. Accordingly, the shear force that is applied to the adhesive layer from the release sheet when the release sheet is removed from the adhesive layer can be reduced, and the thickness of the adhesive layer can be kept from becoming uneven. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, the release sheet may be divided into a plurality of sheet pieces . In this configuration, the release sheet is divided into a plurality of sheet pieces, and each of the sheet pieces is smaller than a release sheet that is formed as a single sheet piece. Accordingly, the shear force that is applied to the adhesive layer from each sheet piece when the release sheet is removed from the adhesive layer can be reduced to keep the thickness of the adhesive layer from becoming uneven. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, the antifog layer may contain a first resin material, the film substrate may contain a second resin material, and the first resin material and the second resin material may have affinity to each other. If the bond between the film substrate and the antifog layer is weak, the film substrate and the antifog layer may separate from each other due to aging or the like. In particular, in a configuration in which the protective film is attached to the antifog layer, when the protective film is removed from the antifog layer, a large tensile force and a large shear force may act on the antifog layer and the antifog layer may separate from the film substrate. However, if resin materials having affinity to each other are used for the film substrate and the antifog layer according to this configuration, the film substrate and the antifog layer can be firmly bonded together. Therefore, the antifog layer can be kept from separating from the film substrate.

As another form of the method for manufacturing a glass plate according to the above aspect, the glass plate may be curved in a direction orthogonal to a surface of the glass plate such that one surface of the glass plate protrudes outward and another surface of the glass plate is recessed, and, in the third step, the antifog film may be attached to the recessed surface of the glass plate. In this configuration, the glass plate is curved in the direction orthogonal to its surface and the antifog film is attached to the recessed surface of the glass plate, and therefore the antifog film attached to the glass plate is likely to be distorted. Specifically, the adhesive layer is arranged along the recessed surface of the glass plate when the antifog film is attached, and therefore stress acts on the antifog film in an expansion/contraction direction. In addition, a force that presses the antifog film against the recessed surface of the glass plate tends to become uneven because it is difficult to uniformly apply a pressing force along the recessed surface. For these reasons, irregularities (creases) are likely to be formed in the adhesive layer, in other words, the antifog film attached to the glass plate is likely to be distorted. However, even if the antifog film attached to the glass plate is distorted, the influence of distortion can be reduced in this configuration as a result of the thickness of the film substrate being reduced and, consequently, perspective distortion that may occur in the glass plate to which the antifog film is attached can be suppressed. Perspective distortion that may occur in the glass plate to which the antifog film is attached can also be suppressed with the above-described forms. Therefore, if the above-described forms are employed to suppress perspective distortion that may occur in the glass plate to which the antifog film is attached, excellent effects are exhibited in a case where a curved glass plate as described above is used.

As another form of the method for manufacturing a glass plate according to the above aspect, the adhesive layer may have an adhesiveness of 0.1 to 50 N when measured using a test method specified in JIS Z 0237. According to this configuration, the antifog film is unlikely to peel off from the recessed surface of the glass plate as a result of the adhesive layer having an adhesiveness of at least 0.1 N. Additionally, in a configuration in which the release sheet is attached to the adhesive layer, the shear force that acts on the adhesive layer when the release sheet is removed from the adhesive layer can be reduced as a result of the adhesive layer having an adhesiveness of no greater than 50N, and the thickness of the adhesive layer can be kept from becoming uneven. Therefore, according to this configuration, the antifog film attached to the glass plate is unlikely to be largely distorted and, consequently, perspective distortion that may occur in the glass plate to which the antifog film is attached can be suppressed.

As another form of the method for manufacturing a glass plate according to the above aspect, the glass plate may be used as a windshield for automobiles and may be attached at an attachment angle of no greater than 45° relative to a horizontal direction. In this configuration, the glass plate is used in a state of being inclined at an angle of no greater than 45° relative to the horizontal direction, and therefore, in a view along the horizontal direction, the path of light passing through the film substrate of the antifog film increases compared to a case where the glass plate is used in a state of being vertically arranged. Therefore, distortion of the antifog film attached to the glass plate has a large influence. Furthermore, if the glass plate, the adhesive layer, and the film substrate have a large difference in coefficient of thermal expansion, these portions are likely to expand differently from each other when the inside temperature of the vehicle changes, which may cause distortion of the antifog film attached to the glass plate. However, the influence of distortion of the antifog film is reduced in the above configuration by reducing the thickness of the film substrate and, consequently, perspective distortion that may occur in the glass plate to which the antifog film is attached can be suppressed. In the above-described forms as well, the antifog film attached to the glass plate is unlikely to be largely distorted and, consequently, perspective distortion that may occur in the glass plate to which the antifog film is attached can be suppressed. Therefore, if the above-described forms are employed to suppress perspective distortion that may occur in the glass plate to which the antifog film is attached, excellent effects are exhibited in a case where the glass plate is used while being inclined as described above.

As another form of the method for manufacturing a glass plate according to the above aspect, the glass plate may include an information acquisition region that is located opposite to an information acquisition device for acquiring information from the outside of a vehicle by emitting and/or receiving light, and through which the light passes, the information acquisition device may be disposed within a distance of 300 mm from the information acquisition region, and, in the third step, the antifog film may be attached to a vehicle interior side surface of the information acquisition region. In this configuration, the antifog film is attached to the information acquisition region located opposite to the information acquisition device, and accordingly if severe perspective distortion occurs in a portion where the antifog film is attached, the perspective distortion may hinder acquisition of information regarding the outside of the vehicle by the information acquisition device. The influence of the perspective distortion can be limited if the information acquisition device is located far from the portion where the perspective distortion occurs. However, in this configuration, the information acquisition device is disposed within a distance of 300 mm from the information acquisition region, and therefore it is highly likely that perspective distortion that occurs in a portion where the antifog film is attached hinders acquisition of information regarding the outside of the vehicle by the information acquisition device. However, perspective distortion that may occur in the glass plate to which the antifog film is attached can be suppressed with the above configuration as a result of the thickness of the film substrate being reduced to reduce the influence of distortion of the antifog film. In the above-described forms as well, the antifog film attached to the glass plate is unlikely to be largely distorted and, consequently, perspective distortion that may occur in the glass plate to which the antifog film is attached can be suppressed. Therefore, if the above-described forms are employed to suppress perspective distortion that may occur in the glass plate to which the antifog film is attached, excellent effects are exhibited in a case where the information acquisition device is disposed within a distance of 300 mm from the information acquisition region and the antifog film is attached to the information acquisition region.

A glass plate for automobiles according to one aspect of the present invention includes a glass plate and an antifog film that includes a film substrate having a thickness of no greater than 100 µm, an antifog layer having antifog properties and layered on one surface of the film substrate, and an adhesive layer layered on another surface of the film substrate, the antifog film being attached to the glass plate via the adhesive layer. According to this configuration, it is possible to provide a glass plate for automobiles that suppresses perspective distortion that may occur in a portion where the antifog film is attached.

As another form of the glass plate for automobiles according to the above aspect, the thickness of the film substrate may be no greater than 50 µm. According to this configuration, it is possible to provide a glass plate for automobiles that further suppresses perspective distortion that may occur in a portion where the antifog film is attached.

As another form of the glass plate for automobiles according to the above aspect, the adhesive layer may have a thickness of no greater than 100 µm. According to this configuration, it is possible to provide a glass plate for automobiles that suppresses perspective distortion that may occur in a portion where the antifog film is attached.

As another form of the glass plate for automobiles according to the above aspect, a loss tangent tanδ of dynamic viscoelasticity of the adhesive layer at 25°C may be no greater than 0.5. According to this configuration, it is possible to provide a glass plate for automobiles that suppresses perspective distortion that may occur in a portion where the antifog film is attached.

As another form of the glass plate for automobiles according to the above aspect, a loss tangent tanδ of dynamic viscoelasticity of the adhesive layer at 25°C may be greater than 0.5. According to this configuration, it is possible to provide a glass plate for automobiles that suppresses perspective distortion that may occur in a portion where the antifog film is attached, even if a material that is likely to plastically deform is employed for the adhesive layer.

As another form of the glass plate for automobiles according to the above aspect, the adhesive layer may contain a substance that has a molecular weight of no greater than a million. According to this configuration, it is possible to provide a glass plate for automobiles that suppresses perspective distortion that may occur in a portion where the antifog film is attached, even if an adhesive layer that contains a substance having a molecular weight of no greater than a million and easily plastically deforms is employed.

As another form of the glass plate for automobiles according to the above aspect, a protective film may be attached to the antifog layer. According to this configuration, it is possible to provide a glass plate for automobiles that suppresses perspective distortion that may occur in a portion where the antifog film is attached.

As another form of the glass plate for automobiles according to the above aspect, the protective film may have a larger thickness than the film substrate has. According to this configuration, it is possible to provide a glass plate for automobiles that suppresses perspective distortion that may occur in a portion where the antifog film is attached.

As another form of the glass plate for automobiles according to the above aspect, dimensions of the protective film in plan view may be larger than dimensions of the antifog film in plan view. According to this configuration, it is possible to provide a glass plate for automobiles from which the protective film can be easily removed.

As another form of the glass plate for automobiles according to the above aspect, the antifog layer may contain a first resin material, the film substrate may contain a second resin material, and the first resin material and the second resin material may have affinity to each other. According to this configuration, it is possible to provide a glass plate for automobiles in which the film substrate and the antifog layer are unlikely to separate from each other.

As another form of the glass plate for automobiles according to the above aspect, the glass plate may be curved in a direction orthogonal to a surface of the glass plate such that one surface of the glass plate protrudes outward and another surface of the glass plate is recessed, and the antifog film may be attached to the recessed surface of the glass plate. According to this configuration, it is possible to provide a curved glass plate for automobiles that suppresses perspective distortion that may occur in a portion where the antifog film is attached.

As another form of the glass plate for automobiles according to the above aspect, the adhesive layer may have an adhesiveness of 0.1 to 50 N when measured using a test method specified in JIS Z 0237. According to this configuration, it is possible to provide a glass plate for automobiles in which the antifog film is unlikely to peel off and that suppresses perspective distortion that may occur in a portion where the antifog film is attached.

As another form of the glass plate for automobiles according to the above aspect, the glass plate may be attached at an attachment angle of no greater than 45° relative to a horizontal direction. According to this configuration, it is possible to provide a glass plate for automobiles that is used while being inclined at an angle of no greater than 45° relative to the horizontal direction and suppresses perspective distortion that may occur in a portion where the antifog film is attached.

As another form of the glass plate for automobiles according to the above aspect, the glass plate may include an information acquisition region that is located opposite to an information acquisition device for acquiring information from the outside of a vehicle by emitting and/or receiving light, and through which the light passes, the information acquisition device may be disposed within a distance of 300 mm from the information acquisition region, and the antifog film may be attached to a vehicle interior side surface of the information acquisition region. According to this configuration, it is possible to provide a glass plate for automobiles that enables the information acquisition device to appropriately acquire information regarding the outside of the vehicle through the information acquisition region, while suppressing perspective distortion that may occur in a portion where the antifog film is attached. Note that the information acquisition device need not be particularly limited so long as it is capable of acquiring information from the outside of the vehicle by emitting and/or receiving light. The information acquisition device broadly includes devices in which errors may occur in acquired information due to perspective distortion, as well as devices for acquiring images such as various imaging devices, for example. For example, the information acquisition device may be a laser device such as a radar that emits and/or receives light beams or a light receiving device that receives signals such as an optical beacon or the like.

A glass plate for automobiles according to one aspect of the present invention includes a glass plate and an antifog film that includes a film substrate, an antifog layer having antifog properties and layered on one surface of the film substrate, and an adhesive layer layered on another surface of the film substrate, the antifog film being attached to the glass plate via the adhesive layer, wherein a protective film is attached to the antifog layer, and the protective film has a larger thickness than the film substrate has. According to this configuration, it is possible to provide a glass plate for automobiles that suppresses perspective distortion that may occur in a portion where the antifog film is attached.

As another form of the glass plate for automobiles according to the above aspect, dimensions of the protective film in plan view may be larger than dimensions of the antifog film in plan view. According to this configuration, it is possible to provide a glass plate for automobiles from which the protective film can be easily removed.

A glass plate for automobiles according to one aspect of the present invention includes a glass plate and an antifog film that includes a film substrate, an antifog layer having antifog properties and layered on one surface of the film substrate, and an adhesive layer layered on another surface of the film substrate, the antifog film being attached to the glass plate via the adhesive layer, wherein the adhesive layer has a thickness of no greater than 100 µm. According to this configuration, it is possible to provide a glass plate for automobiles that suppresses perspective distortion that may occur in a portion where the antifog film is attached.

As another form of the glass plate for automobiles according to the above aspect, a loss tangent tanδ of dynamic viscoelasticity of the adhesive layer at 25°C may be no greater than 0.5. According to this configuration, it is possible to provide a glass plate for automobiles that further suppresses perspective distortion that may occur in a portion where the antifog film is attached.

As another form of the glass plate for automobiles according to the above aspect, a loss tangent tanδ of dynamic viscoelasticity of the adhesive layer at 25°C may be greater than 0.5. According to this configuration, it is possible to provide a glass plate for automobiles that suppresses perspective distortion that may occur in a portion where the antifog film is attached, even if a material that is likely to plastically deform is employed for the adhesive layer.

As another form of the glass plate for automobiles according to the above aspect, the adhesive layer may contain a substance that has a molecular weight of no greater than a million. According to this configuration, it is possible to provide a glass plate for automobiles that further suppresses perspective distortion that may occur in a portion where the antifog film is attached, even if an adhesive layer that contains a substance having a molecular weight of no greater than a million and easily plastically deforms is employed.

A glass plate for automobiles according to one aspect of the present invention includes a glass plate and an antifog film that includes a film substrate, an antifog layer having antifog properties and layered on one surface of the film substrate, and an adhesive layer layered on another surface of the film substrate, the antifog film being attached to the glass plate via the adhesive layer, wherein the antifog layer contains a first resin material, the film substrate contains a second resin material, and the first resin material and the second resin material have affinity to each other. According to this configuration, it is possible to provide a glass plate for automobiles in which the film substrate and the antifog layer are unlikely to separate from each other.

An antifog film according to one aspect of the present invention is an antifog film attached to a vehicle interior side surface of an information acquisition region of a glass plate that is used as a glass plate for automobiles in an automobile in which an information acquisition device can be disposed, the information acquisition region being located opposite to the information acquisition device, and the information acquisition device acquiring information from the outside of the automobile by emitting and/or receiving light that passes through the information acquisition region, the antifog film including a film substrate having a thickness of no greater than 100 µm, an antifog layer having antifog properties and layered on one surface of the film substrate, and an adhesive layer layered on another surface of the film substrate, wherein the glass plate is attached at an attachment angle of no greater than 45° relative to a horizontal direction, and the information acquisition device is disposed within a distance of 300 mm from the information acquisition region. According to this configuration, it is possible to provide an antifog film that is suitable for a glass plate for automobiles used in an automobile in which an information acquisition device can be disposed.

A glass plate for automobiles according to one aspect of the present invention includes a glass plate and an antifog film that includes a film substrate, an antifog layer having antifog properties and layered on one surface of the film substrate, and an adhesive layer layered on another surface of the film substrate, the antifog film being attached to the glass plate via the adhesive layer, wherein a protective film is attached to the antifog layer, and the protective film has a larger thickness than the film substrate has. According to this configuration, it is possible to provide a glass plate for automobiles that suppresses perspective distortion that may occur in a portion where the antifog film is attached.

A glass plate for automobiles according to one aspect of the present invention includes a glass plate and an antifog film that includes a film substrate, an antifog layer having antifog properties and layered on one surface of the film substrate, and an adhesive layer layered on another surface of the film substrate, the antifog film being attached to the glass plate via the adhesive layer, wherein the glass plate is curved in a direction orthogonal to a surface of the glass plate such that one surface of the glass plate protrudes outward and another surface of the glass plate is recessed, the antifog film is attached to the recessed surface of the glass plate, and the adhesive layer has an adhesiveness of 0.1 to 50 N when measured using a test method specified in JIS Z 0237. According to this configuration, it is possible to provide a glass plate for automobiles in which the antifog film is unlikely to peel off and that suppresses perspective distortion that may occur in a portion where the antifog film is attached.

### Advantageous Effects of Invention

According to the present invention, perspective distortion that may occur in a glass plate to which an antifog film is attached can be suppressed.

### Brief Description of Drawings

FIG. 1 is a front view schematically illustrating a windshield according to an embodiment.
FIG. 2 is a cross-sectional view schematically illustrating a windshield according to an embodiment.
FIG. 3A is a diagram for explaining perspective distortion caused by irregularities formed in glass.
FIG. 3B is a diagram for explaining perspective distortion caused by irregularities formed in a film substrate.
FIG. 4 is an enlarged view schematically illustrating a portion of a windshield according to an embodiment around an information acquisition region.
FIG. 5 is a cross-sectional view schematically illustrating a blocking layer according to an embodiment.
FIG. 6 schematically illustrates an antifog film according to an embodiment.
FIG. 7 is a cross-sectional view schematically illustrating a portion of a windshield according to an embodiment around an information acquisition region.
FIG. 8A illustrates a state where waterdrops are attached to an antifog layer.
FIG. 8B illustrates a state where waterdrops are attached to an antifog layer.
FIG. 9A schematically illustrates a state of the vehicle exterior side of a bracket according to an embodiment.
FIG. 9B schematically illustrates a state of the vehicle interior side of a bracket according to an embodiment.
FIG. 10 schematically illustrates a cover according to an embodiment.
FIG. 11 schematically illustrates a manufacturing process of a glass plate according to an embodiment.
FIG. 12A schematically illustrates a manufacturing process of a windshield according to an embodiment.
FIG. 12B schematically illustrates the manufacturing process of a windshield according to an embodiment.
FIG. 12C schematically illustrates the manufacturing process of a windshield according to an embodiment.
FIG. 12D schematically illustrates the manufacturing process of a windshield according to an embodiment.
FIG. 12E schematically illustrates the manufacturing process of a windshield according to an embodiment.
FIG. 12F schematically illustrates the manufacturing process of a windshield according to an embodiment.
FIG. 13 schematically illustrates a windshield according to another embodiment.
FIG. 14 schematically illustrates a windshield according to another embodiment.

### Description of Embodiments

The following describes an embodiment (hereinafter also referred to as "this embodiment") according to one aspect of the present invention with reference to the drawings. However, this embodiment described below is merely an example of the present invention in all aspects. It goes without saying that various modifications and alterations can be made without departing from the scope of the present invention. That is, the present invention can be carried out by employing specific configurations as appropriate according to the embodiment. Note that the following description is made based on directions shown in the drawings for convenience of description.

### §1 Exemplary configuration

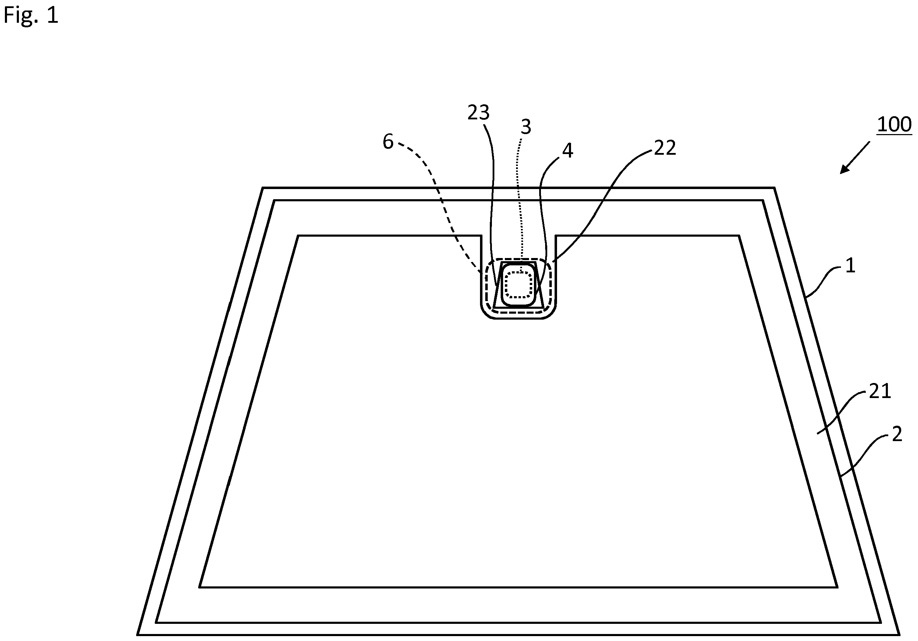

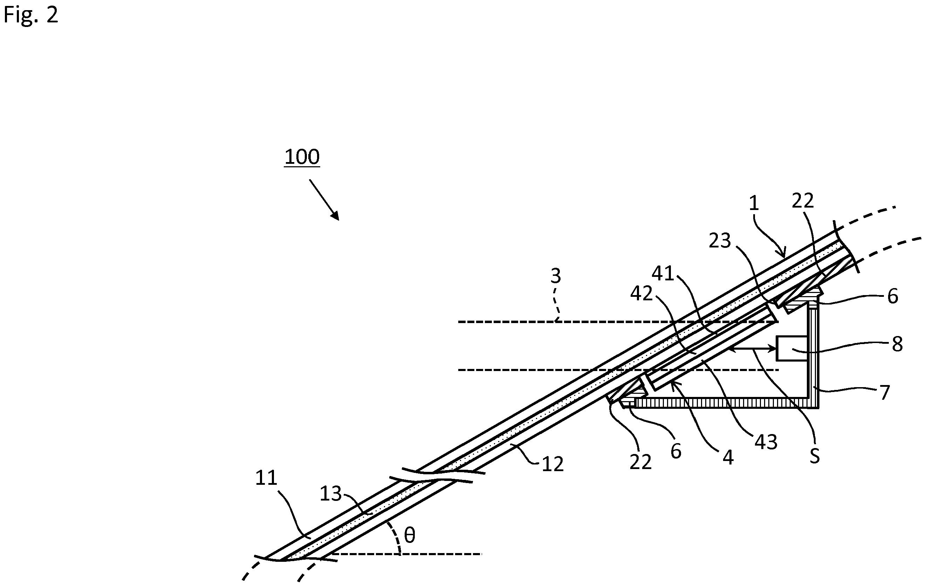

First, a windshield 100 according to this embodiment will be described with reference to FIGS. 1 and 2. FIGS. 1 and 2 are a front view and a cross-sectional view, respectively, schematically illustrating one example of the windshield 100 according to this embodiment.

As illustrated in FIGS. 1 and 2, the windshield 100 according to this embodiment includes a glass plate 1 and a blocking layer 2 that is constituted by ceramic of a dark color and blocks the view from the outside of a vehicle. The blocking layer 2 is provided along a peripheral portion of the glass plate 1 and includes an annular peripheral portion 21 and a protruding portion 22 that protrudes inward in an in-plane direction from the center of an upper side portion of the peripheral portion 21.

The protruding portion 22 has an opening 23 in which the ceramic is not layered, and a frame-shaped bracket 6 is fixed around the opening 23. It is possible to attach, to the bracket 6, a cover 7 for attaching an information acquisition device that acquires information from the outside of the vehicle by emitting and/or receiving light. Thus, the windshield 100 is configured such that the information acquisition device can be disposed inside the vehicle.

As one example of the information acquisition device, a camera 8 (imaging device) is attached inside the vehicle in this embodiment. When the camera 8 is attached inside the vehicle, an information acquisition region 3 through which light passes is set at a position on the glass plate 1 within the opening 23 opposite to the camera 8. That is, the camera 8 captures an image of the outside of the vehicle via the information acquisition region 3.

In this embodiment, an antifog film 4 is attached to a vehicle interior side surface of the glass plate 1 in the information acquisition region 3 to impart the antifog function to the information acquisition region 3. The antifog film 4 includes a film substrate 42, an antifog layer 43 that has antifog properties and is layered on one surface of the film substrate 42, and an adhesive layer 41 that is layered on another surface of the film substrate 42, and the antifog film 4 is attached to the glass plate 1 via the adhesive layer 41. If the thickness of the adhesive layer 41 becomes uneven, the antifog film 4 is distorted as described above and perspective distortion occurs in a portion where the antifog film 4 is attached.

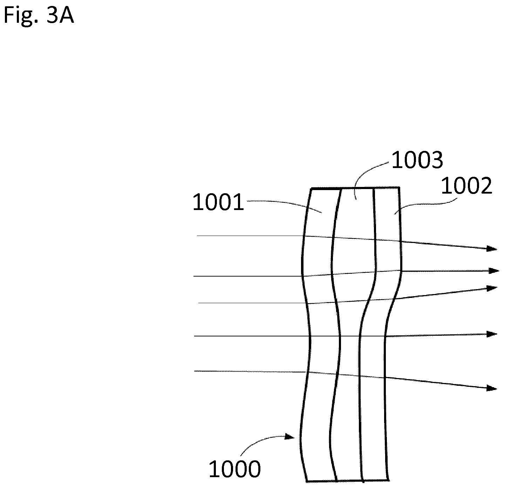

Here, perspective distortion will be described with reference to FIG. 3A. FIG. 3A is a cross-sectional view schematically illustrating perspective distortion occurring in a laminated glass 1000. Perspective distortion is a phenomenon in which a view seen through glass is distorted. The laminated glass 1000 illustrated in FIG. 3A includes an outer glass plate 1001 and an inner glass plate 1002, and an interlayer 1003 is arranged between these glass plates (1001 and 1002). The interlayer 1003 is in close contact with the outer glass plate 1001 and the inner glass plate 1002, and there is almost no difference in refractive index between the interlayer and these glass plates. Therefore, light is unlikely to refract at interfaces between the interlayer and the plates and travels substantially straight. Also, when an image is seen through the single outer glass plate 1001 or the single inner glass plate 1002, distortion of the image is suppressed because random irregularities formed in a front surface of a glass plate normally correspond to those formed in a back surface of the glass plate. However, the outer glass plate 1001 and the inner glass plate 1002 are different glass plates, and accordingly irregularities formed in their respective surfaces do not necessarily correspond and positions of the irregularities normally differ between these glass plates (1001 and 1002). Therefore, as illustrated in FIG. 3A, positions of irregularities formed in a vehicle exterior side surface of the outer glass plate 1001 essentially differ from positions of irregularities formed in a vehicle interior side surface of the inner glass plate 1002. As a result, light incident on the vehicle exterior side surface of the outer glass plate 1001 refracts, travels straight through the outer glass plate 1001, the interlayer 1003, and the inner glass plate 1002, and further refracts at the vehicle interior side surface of the inner glass plate 1002. Therefore, incident light and outgoing light are not parallel to each other and have different angles. This causes distortion of an image that is formed by light entering through the laminated glass 1000. Thus caused distortion of an image is perspective distortion. Perspective distortion as described above may be similarly caused by distortion of the antifog film 4 attached to the glass plate 1, that is, irregularities formed in the antifog film 4.

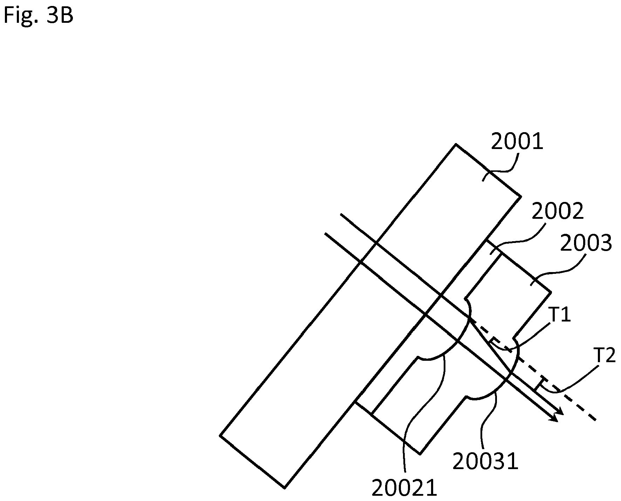

The following describes, with reference to FIG. 3B, perspective distortion that may be caused if irregularities are formed in the antifog film 4 attached to the glass plate 1. FIG. 3B is a diagram for explaining perspective distortion caused by irregularities formed in the antifog film. Perspective distortion as described above may be similarly caused if the antifog film 4 attached to the glass plate 1 is distorted, that is, irregularities are formed in the antifog film 4. Specifically, let us assume that a film substrate 2003 (antifog film) is attached to a glass plate 2001 via an adhesive layer 2002 as shown in FIG. 3B. In this case, if a raised portion 20021 (crease) is formed in the adhesive layer 2002, a raised portion 20031 (crease) is also formed in the film substrate 2003. As a result, the raised portions (20021 and 20031) have the function of a convex lens, and the flux of incident light (arrows in the drawing) refracts (refracts at an angle of T1 in the drawing) in a direction to converge. Such refraction of the incident light occurs differently according to irregularities formed in the antifog film. Therefore, if irregularities are formed in the antifog film 4, perspective distortion may occur in a portion where the irregularities are formed. It is noted that, as is clear from FIG. 3B, the degree of the above-described refraction (T2 in FIG. 3B) increases as the thickness of the film substrate 2003 increases.

Therefore, the thickness of the film substrate 42 is set to no greater than 100 µm in this embodiment to shorten the path of light passing through the film substrate 42 and reduce the degree of refraction (T2 in FIG. 3B) caused by irregularities formed in the antifog film 4. Thus, the influence of distortion of the antifog film 4 can be reduced to suppress perspective distortion that may occur in the glass plate 1 to which the antifog film 4 is attached. The following describes respective constituent elements.

### Glass plate

First, the glass plate 1 will be described. As illustrated in FIG. 2, the glass plate 1 according to this embodiment includes an outer glass plate 11 that is arranged on the vehicle exterior side, an inner glass plate 12 that is arranged on the vehicle interior side, and an interlayer 13 that is arranged between the outer glass plate 11 and the inner glass plate 12.

The interlayer 13 bonds a vehicle interior side surface of the outer glass plate 11 and a vehicle exterior side surface of the inner glass plate 12 to each other. Thus, the glass plate 1 is formed as a so-called laminated glass. In the following description, a vehicle exterior side surface of the outer glass plate 11 will also be referred to as a "first surface", the vehicle interior side surface of the outer glass plate 11 will also be referred to as a "second surface", the vehicle exterior side surface of the inner glass plate 12 will also be referred to as a "third surface", and a vehicle interior side surface of the inner glass plate 12 will also be referred to as a "fourth surface".

### Outer glass plate and inner glass plate

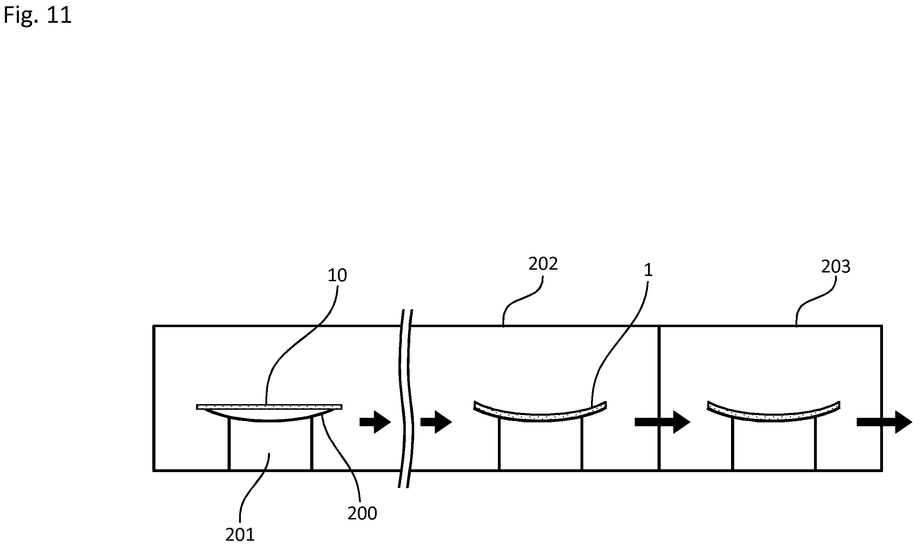

The glass plates (11 and 12) have substantially the same shape as each other and have a trapezoidal shape in plan view. Further, the glass plates (11 and 12) are curved in a direction orthogonal to their surfaces (see FIG. 11) as described later. Specifically, each of the glass plates (11 and 12) is curved such that its vehicle exterior side surface protrudes outward and its vehicle interior side surface is recessed. That is, in this embodiment, the first surface is an outwardly protruding surface and the fourth surface is a recessed surface.

Known glass plates can be used as the glass plates (11 and 12). For example, the glass plates (11 and 12) may be made of heat-ray absorbing glass, clear glass, green glass, or UV green glass. However, the glass plates (11 and 12) need to realize visible light transmittance that conforms to the safety standards of the country in which the automobile is to be used. For example, the glass plates (11 and 12) may be configured to have a transmittance of 70% or more with respect to visible light (380 nm to 780nm) as specified in JIS R 3211. Note that this transmittance can be measured using spectrometry defined in JIS Z 8722, as specified in JIS R 3212 (3.11 Visible light transmittance test). For example, adjustments can be made so that the outer glass plate 11 ensures a desired solar absorptance and the inner glass plate 12 provides visible light transmittance that meets safety standards. The following shows an example of the composition of clear glass and an example of the composition of heat-ray absorbing glass, as examples of the composition of glass that can constitute the glass plates (11 and 12).

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained, which is based on the composition of clear glass, by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

Although there is no particular limitation on the thickness of the glass plate 1 according to this embodiment, the total thickness of the glass plates (11 and 12) is preferably set to 2.5 to 10.6 mm, more preferably 2.6 to 3.8 mm, and even more preferably 2.7 to 3.2 mm, from the viewpoint of weight reduction. The weight can be reduced by reducing the total thickness of the glass plates (11 and 12) as described above.

Although there is no particular limitation on the thicknesses of the glass plates (11 and 12), the thicknesses of these glass plates (11 and 12) can be determined as described below, for example. That is, durability and impact resistance against flying objects such as small stones are mainly required for the outer glass plate 11. On the other hand, the weight increases as the thickness of the outer glass plate 11 increases, which is not preferable. From this viewpoint, the thickness of the outer glass plate 11 is preferably 1.6 to 2.5 mm, and more preferably 1.9 to 2.1 mm. It is possible to determine the thickness to employ as appropriate according to the embodiment.

The thickness of the inner glass plate 12 can be made equal to the thickness of the outer glass plate 11, but in order to reduce the weight of the glass plate 1, for example, the thickness can be made smaller than that of the outer glass plate 11. Specifically, when the strength of the glass is taken into consideration, the thickness of the inner glass plate 12 is preferably 0.6 to 2.1 mm, more preferably 0.8 to 1.6 mm, and even more preferably 1.0 to 1.4 mm. Yet more preferably, the thickness of the inner glass plate 12 is 0.8 to 1.3 mm. For the inner glass plate 12 as well, it is possible to determine the thickness to employ as appropriate according to the embodiment.

### Interlayer

The interlayer 13 is a layer that is sandwiched between the glass plates (11 and 12) and bonds the glass plates (11 and 12) together. The interlayer 13 can be configured as appropriate according to the embodiment. For example, the interlayer 13 can be constituted by three layers, namely a soft core layer and a pair of outer layers that are harder than the core layer and between which the core layer is sandwiched. The breakage resistance performance and the sound insulation performance of the glass plate 1 can be enhanced if the interlayer 13 is constituted by a plurality of layers including a soft layer and hard layers as described above.

Materials of the interlayer 13 need not be particularly limited and may be selected as appropriate according to the embodiment. For example, if the interlayer 13 is constituted by a plurality of layers that differ from each other in hardness as described above, a polyvinyl butyral resin (PVB) can be used for hard outer layers. Polyvinyl butyral resin (PVB) has excellent adhesiveness to the outer glass plate 11 and the inner glass plate 12 and penetration resistance and is thus preferable as the material of the outer layers. On the other hand, the soft core layer can be made of an ethylene vinyl acetate resin (EVA) or a polyvinyl acetal resin, which is softer than the polyvinyl butyral resin included in the outer layers.

Generally, the hardness of a polyvinyl acetal resin can be controlled by adjusting (a) the degree of polymerization of a polyvinyl alcohol, which is the starting material, (b) the degree of acetalization, (c) the type of plasticizer, (d) the ratio of the plasticizer to be added, and the like. Accordingly, a hard polyvinyl acetal resin that is used for the outer layers and a soft polyvinyl acetal resin that is used for the core layer may be produced by appropriately adjusting at least one condition selected from the aforementioned conditions (a) to (d) .

Furthermore, the hardness of a polyvinyl acetal resin can also be controlled based on the type of aldehyde that is used for acetalization and whether co-acetalization using a plurality of types of aldehydes or pure acetalization using a single type of aldehyde is performed. Although not necessarily applicable to every case, the larger the number of carbon atoms of the aldehyde that is used to obtain a polyvinyl acetal resin is, the softer the resulting polyvinyl acetal resin tends to be. Accordingly, for example, if the outer layers are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer.

The total thickness of the interlayer 13 can be set as appropriate according to the embodiment. For example, the total thickness of the interlayer 13 can be set to 0.3 to 6.0 mm, preferably 0.5 to 4.0 mm, and more preferably 0.6 to 2.0 mm. If the interlayer 13 is constituted by three layers, namely a soft core layer and a pair of outer layers between which the core layer is sandwiched, the thickness of the core layer is preferably 0.1 to 2.0 mm, and more preferably 0.1 to 0.6 mm. On the other hand, the thickness of each outer layer is preferably larger than that of the core layer, specifically, preferably 0.1 to 2.0 mm, and more preferably 0.1 to 1.0 mm.

Although there is no particular limitation on the method for manufacturing the interlayer 13 as described above, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated using a pressing process, a lamination process, or the like. In the method for laminating using the pressing process, the lamination process, or the like, each of the resin films before laminating may have a single-layer structure or a multilayer structure. The interlayer 13 may be constituted by a single layer rather than the plurality of layers as described above.

### Blocking layer

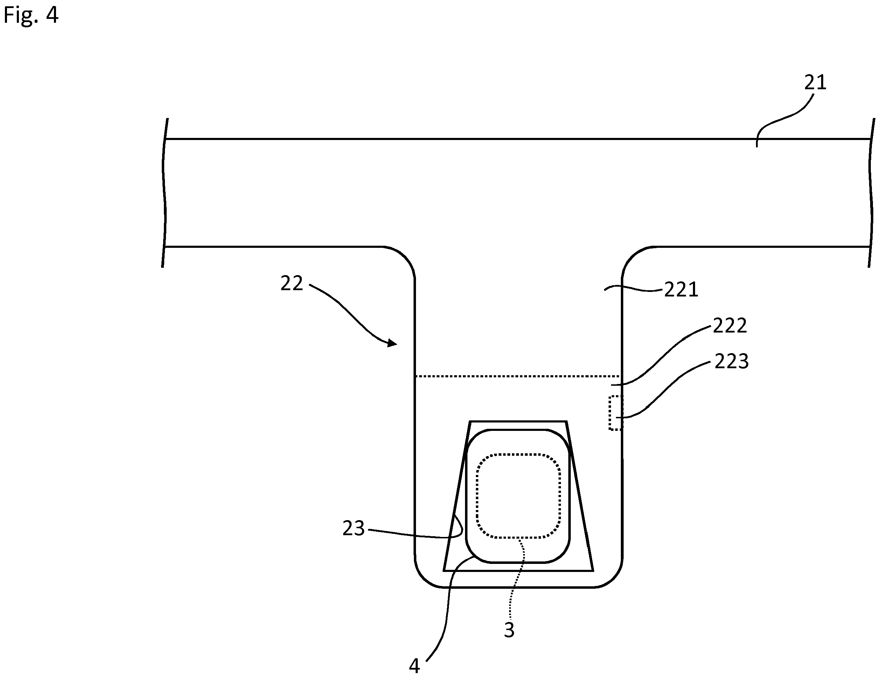

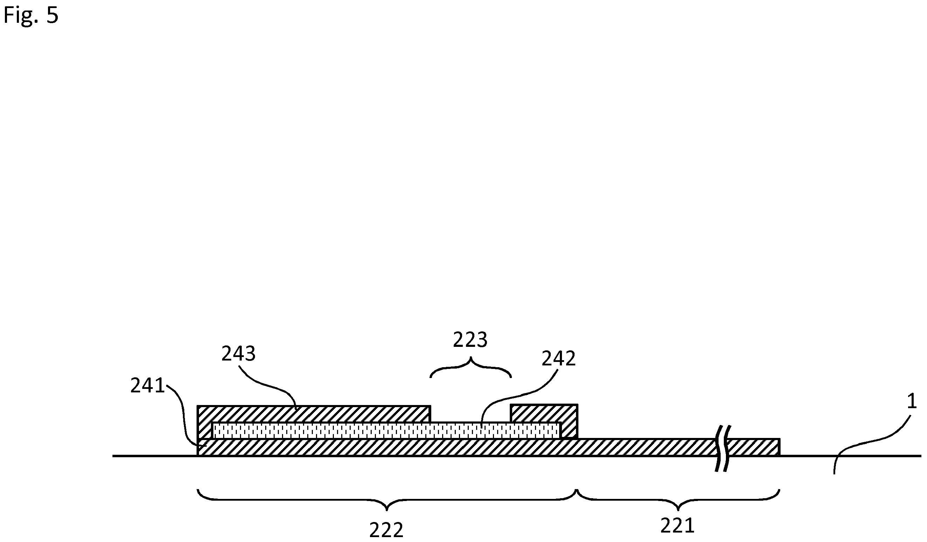

Next, the blocking layer 2 that blocks the view from the outside of the vehicle will be described with further reference to FIGS. 4 and 5. FIG. 4 is an enlarged view schematically illustrating a portion of the windshield 100 according to this embodiment around the information acquisition region 3. FIG. 5 is a cross-sectional view schematically illustrating the blocking layer 2 according to this embodiment.

As shown in FIGS. 1 and 2, the blocking layer 2 is provided on the fourth surface of the glass plate 1, namely the vehicle interior side surface of the inner glass plate 12. In this embodiment, the blocking layer 2 includes the annular peripheral portion 21 that is layered along a peripheral portion of the fourth surface of the glass plate 1 and the substantially rectangular protruding portion 22 that protrudes inward in an in-plane direction from the center of the upper side portion of the peripheral portion 21.

As shown in FIGS. 1, 2, and 4, the opening 23 is provided in the protruding portion 22 at a position corresponding to the information acquisition region 3. The opening 23 has a trapezoidal shape. Dimensions of the opening 23 in plan view are set larger than dimensions of the information acquisition region 3 in plan view. Thus, the information acquisition region 3 is surrounded by the blocking layer 2.

Further, as shown in FIG. 4, the protruding portion 22 in this embodiment is constituted by an upper region 221 that is located on the upper side of the opening 23, a lower region 222 that is located below the upper region 221 and includes the opening 23, and a lateral region 223 that is a trapezoidal region formed in a lateral portion of the lower region 222. The protruding portion 22 has a layer structure as shown in FIG. 5.

That is, the upper region 221 is constituted by a single layer, namely a first ceramic layer 241 formed of ceramic of a dark color. The lower region 222 is constituted by three layers, namely the first ceramic layer 241, a sliver layer 242, and a second ceramic layer 243 that are layered in this order on the inner surface of the glass plate 1. The silver layer 242 is formed of silver and the second ceramic layer 243 is formed of the same material as the first ceramic layer 241.

The lateral region 223 is constituted by the first ceramic layer 241 and the silver layer 242 that are layered in this order on the inner surface of the glass plate 1, and the silver layer 242 is exposed on the vehicle interior side in the lateral region. The lowermost first ceramic layer 241 is shared by all the regions, and the second silver layer 242 is shared by the lower region 222 and the lateral region 223.

As described later, a bracket for attaching a cover of the camera 8 is bonded using an adhesive to the protruding portion 22 formed on the vehicle interior side surface of the inner glass plate 12. If a urethane-silicone-based adhesive is used at this time, for example, the adhesive may deteriorate due to ultraviolet rays or the like. Therefore, it is preferable that the ceramic layers (241 and 243) each have a thickness of 20 to 50 µm, for example, to ensure light blocking properties and prevent deterioration of the adhesive. The thickness of the silver layer 242 is preferably 20 to 50 µm, for example. Accordingly, the thickness D1 of the lower region 222 of the protruding portion 22 is preferably 60 to 150 µm, for example.

The blocking layer 2 including the peripheral portion 21 and the protruding portion 22 as described above can be formed as follows, for example. First, the first ceramic layer 241 is applied onto the glass plate. The first ceramic layer 241 is shared by the peripheral portion 21 and the protruding portion 22. Next, the silver layer 242 is applied onto regions of the first ceramic layer 241 corresponding to the lower region 222 and the lateral region 223. Lastly, the second ceramic layer 243 is applied onto a region of the silver layer 242 corresponding to the lower region 222.

A portion of the silver layer 242 that is exposed in the lateral region 223 is provided with wiring for grounding. Although the ceramic layers (241 and 243) and the silver layer 242 can be formed using a screen printing process, these layers can alternatively be produced by transferring a transfer film for firing to the glass plate and firing it. By configuring the lower region 222 to include the silver layer 242 as described above, electromagnetic waves can be blocked and the camera 8, which is attached via the bracket 6 fixed to the lower region 222, can be kept from being affected by electromagnetic waves.

The material of the ceramic layers (241 and 243) may be selected as appropriate according to the embodiment so long as the view from the outside of the vehicle can be blocked. For example, the ceramic layers (241 and 243) can be formed using ceramic of a dark color such as black, brown, gray, or dark blue. Specifically, the ceramic layers (241 and 243) can be formed using ceramic that has the composition shown in Table 1 below. However, the composition of ceramic forming the ceramic layers (241 and 243) is not limited to that shown in Table 1 below, and may be selected as appropriate according to the embodiment.

**Table 1**

| | | Ceramic paste |
|---|---|---|
| Pigment *1 | mass% | 10% |
| Resin (cellulose resin) | mass% | 5% |
| Organic solvent (pine oil) | mass% | 15% |
| Glass binder *2 | mass% | 70% |
| Viscosity | dPs | 150 |

| | | |
|---|---|---|
| *1, Manufactured by Asahi Kasei Kogyo Co., LTD.: Black 6350 (Pigment Green 17) *2: Main components: bismuth borosilicate, zinc borosilicate | | |

Also, the material of the silver layer 242 maybe selected as appropriate according to the embodiment. For example, a material that has the composition shown in Table 2 below can be used for the silver layer 242.

**Table 2**

| | | Conductive ceramic paste |
|---|---|---|
| Silver particles (average particle diameter :10 µm) | mass% | 70 |
| Glass binder *1 | mass% | 10 |
| Resin (cellulose resin) | mass% | 5 |
| Organic solvent (terpineol) | mass% | 15 |
| Viscosity | dPs | 180 |

| | | |
|---|---|---|
| *1: Main components: bismuth borosilicate, zinc borosilicate | | |

The ceramic layers (241 and 243) and the silver layer 242 can be formed by performing screen printing under the conditions that a polyester screen of 355 mesh is used, the coating thickness is 20 µm, the tension is 20 Nm, the squeegee hardness is 80 degrees, the attachment angle is 75°, and the printing speed is 300 mm/s, and performing drying in a drying furnace at 150°C for 10 minutes, for example. When the first ceramic layer 241, the silver layer 242, and the second ceramic layer 243 are layered in this order, the above-described screen printing and drying are repeated.

Dimensions of respective portions of the blocking layer 2 may be set as appropriate according to the embodiment. For example, the width of portions of the peripheral portion 21 respectively extending along the upper edge and the lower edge of the glass plate 1 may be set in a range of 20 to 100 mm, and the width of portions of the peripheral portion 21 respectively extending along the left edge and the right edge of the glass plate 1 may be set in a range of 15 to 70 mm. Dimensions of the protruding portion 22 may be set in a range from 200 mm (length) by 100 mm (width) to 400 mm (length) by 200 mm (width) .

Dimensions of the information acquisition region 3 in plan view are determined according to the information acquisition device (camera 8) disposed inside the vehicle. On the other hand, dimensions of the opening 23 in plan view may be set appropriately larger than the dimensions of the information acquisition region 3 in plan view. For example, the opening 23 may be set as a trapezoidal region having an upper side of 85 mm, a lower side of 95 mm, and a height of 65 mm in plan view.

Since the glass plate 1 is curved in a direction orthogonal to its surface, the opening 23 is also curved in the direction orthogonal to the surface. The opening 23 may have a curved shape with a curve amount in a range of 500 to 10000 mm, and preferably in a range of 1000 to 7500 mm. The curve amount of the opening 23 can be measured as follows. That is, the outwardly protruding surface (first surface) of the glass plate 1 is placed on a horizontal surface, and the height of the recessed surface (fourth surface) is measured using a depth gauge. Measurement is performed at a total of five measurement points, namely both ends of the opening 23 in the horizontal direction and points that equally divide a line that connects the both ends into four sections. The curve amount can be calculated from measurement values obtained using the depth gauge and a positional relationship between the five measurement points.

### Antifog film

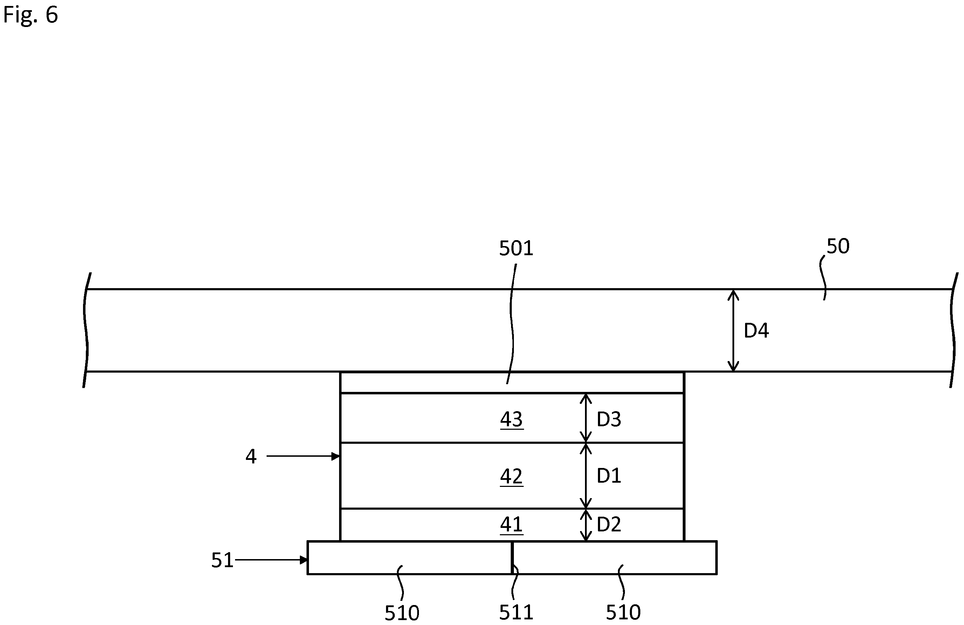

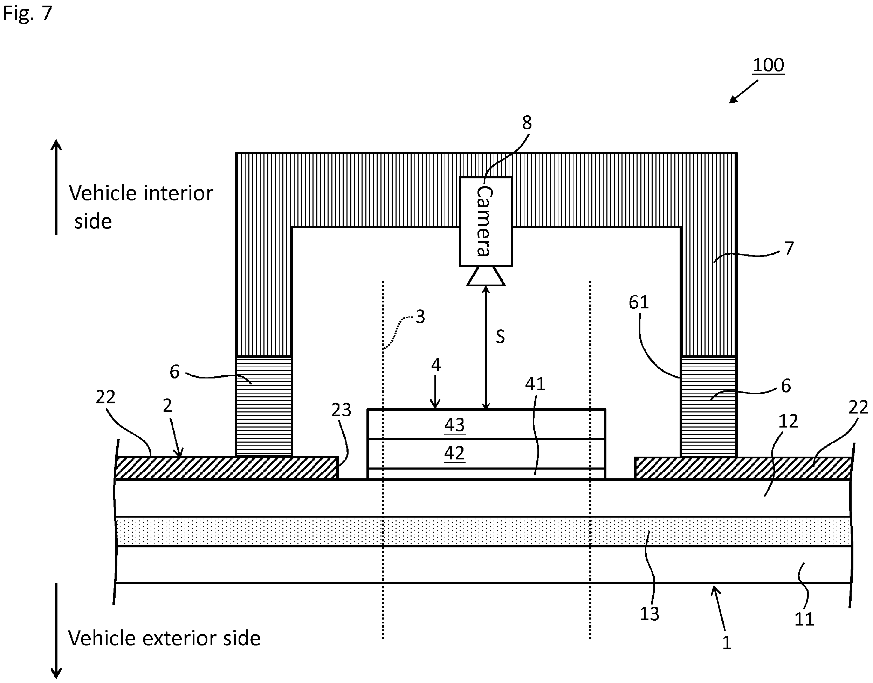

Next, the antifog film 4 will be described with further reference to FIGS. 6 and 7. FIG. 6 schematically illustrates the antifog film 4 before it is attached to the glass plate 1. FIG. 7 is a cross-sectional view schematically illustrating a portion around the information acquisition region 3 to which the antifog film 4 is attached.

As shown in FIGS. 6 and 7, the antifog film 4 has a rectangular cross section, and includes the sheet-shaped film substrate 42, the antifog layer 43 that has antifog properties and is layered on one surface of the film substrate 42, and the adhesive layer 41 that is layered on the other surface of the film substrate 42. As shown in FIG. 6, a substantially rectangular release sheet 51 is attached to the adhesive layer 41 until the antifog film is to be attached to the glass plate 1. Also, a substantially rectangular protective film 50 is attached to the antifog layer 43 until the cover 7 is to be attached as described later. The antifog film 4 is attached to an object (in this embodiment, the fourth surface of the glass plate 1) via the adhesive layer 41 after the release sheet 51 is removed. The following describes the respective layers.

### (A) Antifog layer

First, the antifog layer 43 will be described. The antifog layer 43 is the outermost layer of the antifog film 4 and exhibits the antifog function. The antifog layer 43 can be formed by layering an antifog material that has antifog properties on the film substrate 42, for example. The type of the antifog layer 43 need not be particularly limited as long as it has antifog properties, and a known layer can be used as the antifog layer. In general, the types of the antifog layer include a hydrophilic type that turns water generated from water vapor into a water layer on its surface, a water absorbent type that absorbs water vapor, and a water repellent type that repels waterdrops produced by water vapor. All these types can be used as the antifog layer 43.

If the water absorbent type is employed, the antifog layer 43 can be configured as described below, for example. That is, the antifog layer 43 can be configured to include a water repellent group and a metallic oxide component as antifog materials, and to preferably further include a water absorbent resin. The antifog layer 43 may further include other functional components as needed. There is no limitation on the type of water absorbent resin as long as the water absorbent resin can absorb and hold water. The antifog layer 43 can be supplied with a water repellent group using a metallic compound containing a water repellent group (water repellent group-containing metallic compound) . The antifog layer 43 can be supplied with a metallic oxide component using the water repellent group-containing metallic compound, a metallic compound other than the water repellent group-containing metallic compound, minute particles of a metallic oxide, or the like. The following describes respective components.

### Water absorbent resin

First, the water absorbent resin will be described. The antifog layer 43 can contain, as the water absorbent resin, at least one type of polymer selected from the group consisting of urethane resin, epoxy resin, acrylic resin, polyvinyl acetal resin, and polyvinylalcohol resin. An example of the urethane resin is polyurethane resin constituted by polyisocyanate and polyol. Acrylic polyol and polyoxyalkylene-based polyol are preferable as the polyol. Examples of the epoxy resin include glycidyl ether-based epoxy resin, glycidyl ester-based epoxy resin, glycidyl amine-based epoxy resin, and cyclic aliphatic epoxy resin. The cyclic aliphatic epoxy resin is preferable. The following describes the polyvinyl acetal resin (referred to merely as "polyacetal" hereinafter), which is a preferable water absorbent resin.

Polyvinyl acetal can be obtained by acetalizing an aldehyde with polyvinyl alcohol through a condensation reaction. The acetalization using polyvinyl alcohol is performed using a known method such as a precipitation method in which an aqueous medium is used in the presence of an acid catalyst, or a dissolution method in which a solvent such as alcohol is used. The acetalization can be performed in parallel with the saponification of polyvinyl acetate. The degree of acetalization is preferably 2 to 40 mol%, more preferably 3 to 30 mol%, and even more preferably 5 to 20 mol%, and optionally 5 to 15 mol%. The degree of acetalization can be measured based on 13C nuclear magnetic resonance spectroscopy, for example. Polyvinyl acetal whose degree of acetalization is within the above-described range is suitable for forming an antifog layer having favorable water absorbing properties and water resistance.

The average degree of polymerization of the polyvinyl alcohol is preferably 200 to 4500, and more preferably 500 to 4500. A high average degree of polymerization is advantageous in the formation of an antifog layer having favorable water absorbing properties and water resistance, but if the average degree of polymerization is excessively high, the viscosity of the solution will become excessively high, and formation of the antifog layer may be adversely affected. A favorable degree of saponification of the polyvinyl alcohol is 75 to 99.8 mol%.

Examples of the aldehyde to be condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and condensed aromatic aldehyde such as naphthaldehyde or anthraldehyde. Aromatic aldehydes, which are highly hydrophobic, are advantageous in the formation of an antifog layer with a low degree of acetalization and excellent water resistance. Use of aromatic aldehydes is also advantageous in that an antifog layer having high water absorbency is formed while a large number of hydroxy groups are caused to remain. It is preferable that the polyvinyl acetal has an acetal structure derived from an aromatic aldehyde, particularly benzaldehyde.

The content of the water absorbent resin (polymer) in the antifog layer 43 is preferably at least 50 mass%, more preferably at least 60 mass%, and even more preferably at least 65 mass%, and preferably no greater than 99 mass%, more preferably no greater than 90 mass%, and even more preferably no greater than 85 mass%, from the viewpoint of hardness, water absorbing properties, and antifog properties. In this case, the antifog layer 43 can thermally expand more easily compared to when it is only made of hydrophilic inorganic materials. Therefore, even if the film substrate 42 is made of a material that is likely to thermally expand, such as polyethylene or polyethylene terephthalate, the antifog layer 43 can conform to thermal expansion of the film substrate 42. Accordingly, even if the antifog film 4 is placed in a relatively high-temperature atmosphere, the antifog film is unlikely to peel off from the glass plate. It should be noted that the antifog layer 43 can be made relatively soft if a polymer is contained as a main component as described above. For example, the pencil hardness of the antifog layer 43 can be no greater than 2H.

### Water repellent group

Next, the water repellent group will be described. The water repellent group facilitates the realization of both strength and antifog properties of the antifog layer, and contributes to ensuring the straightness of incident light even if waterdrops are formed due to the hydrophobic surface of the antifog layer. It is preferable to use a water repellent group that has high water repellency in order to sufficiently obtain the effect of the water repellent group. For example, the antifog layer 43 can contain at least one type of water repellent group selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may make the antifog layer opaque. The number of carbon atoms in the chain alkyl groups is preferably 20 or less from the viewpoint of the balance between the antifog properties, strength, and external appearance of the antifog layer. The chain alkyl groups have 1 to 8 or 4 to 16 carbon atoms, for example, and preferably have 4 to 8 carbon atoms. Particularly preferable alkyl groups are linear alkyl groups having 4 to 8 carbon atoms such as an n-pentyl group, an n-hexyl group, an n-heptyl group, and an n-octyl group. The fluorine-substituted alkyl groups in (2) may be groups obtained by substituting only a portion of hydrogen atoms of a chain or cyclic alkyl group with a fluorine atom, or groups obtained by substituting all of hydrogen atoms of a chain or cyclic alkyl group with a fluorine atom, such as linear perfluoroalkyl groups. The fluorine-substituted alkyl groups have high water repellency, and therefore, the effects can be sufficiently obtained by adding a small amount thereof. It should be noted that, when the content of the fluorine-substituted alkyl groups is excessively large, a component containing the fluorine-substituted alkyl groups may be separated from the other components in a coating solution for forming an antifog layer.

### Hydrolyzable metallic compound containing water repellent group

In order to blend the water repellent group into the antifog layer 43, a metallic compound containing a water repellent group (water repellent group-containing metallic compound), particularly a metallic compound containing a water repellent group and a hydrolyzable functional group or a halogen atom (water repellent group-containing hydrolyzable metallic compound), or a hydrolysate thereof is added to a coating solution for forming the antifog layer. In other words, the water repellent group may be derived from the water repellent group-containing hydrolyzable metallic compound. A water repellent group-containing hydrolyzable silicon compound represented by Formula (I) below is preferably used as the water repellent group-containing hydrolyzable metallic compound.

RₘSiY₄₋ₘ (I)

Here, R represents a water repellent group, that is, a chain or cyclic alkyl group having 1 to 30 carbon atoms in which at least a portion of hydrogen atoms are optionally substituted with a fluorine atom, Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, for example, and preferably an alkoxy group, particularly an alkoxy group having 1 to 4 carbon atoms. An example of the alkenyloxy group is an isopropenoxy group. The halogen atom is preferably a chlorine atom. It should be noted that the functional groups shown here as examples can also be used as "hydrolyzable functional groups" described hereinafter. m is preferably 1 or 2.

When the progress of hydrolysis and polycondensation is completed, the compound represented by Formula (I) supplies a component represented by Formula (II) below.

RₘSiO_{(4-m)/2} (II)

Here, R and m are as described above. In practice, after the hydrolysis and polycondensation have been performed, the compounds represented by Formula (II) form a network structure in which silicon atoms are linked to one another via oxygen atoms, in the antifog layer.

As described above, the compounds represented by Formula (I) are hydrolyzed or partially hydrolyzed, and at least portions thereof are polycondensed. Thus, a network structure including siloxane bonds (Si-O-Si) is formed in which silicon atoms and oxygen atoms are alternately linked and that spreads three-dimensionally. A water repellent group R is linked to the silicon atom contained in this network structure. In other words, the water repellent group R is immobilized in the network structure including siloxane bonds via an R-Si bond. This structure is advantageous in terms of uniform dispersion of the water repellent groups R in the antifog layer. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound into a coating solution for forming an antifog layer, a network structure including siloxane bonds containing silicon atoms that are linked to water repellent groups and silicon atoms that are not linked to water repellent groups can be formed. With such a structure, it is easy to independently adjust the content of the water repellent group and the content of the metallic oxide component in the antifog layer.

When the antifog layer contains a water absorbent resin, the water vapor permeability of the surface of the antifog layer containing the water absorbent resin is enhanced due to the water repellent groups, and the antifog performance is thus enhanced. The two functions, namely the water absorbent function and the water repellent function, are contrary to each other, and therefore, conventionally, a water absorbent material and a water repellent material are distributed in separate layers. However, the maldistribution of water near the surface of the antifog layer is resolved due to the water repellent groups contained in the antifog layer, so that the time it takes until dew condenses is prolonged, and the antifog properties of the antifog layer are thus enhanced. The following is a description of the effects.

Water vapor that has infiltrated the antifog layer containing the water absorbent resin forms hydrogen bonds with hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog layer. The water repellent groups prevent the formation of hydrogen bonds and facilitate the dissociation of formed hydrogen bonds in the antifog layer. If the content of the water absorbent resin is the same, the number of hydroxy groups capable of forming a hydrogen bond in the antifog layer is the same, but the speed of hydrogen bond formation is reduced due to the water repellent groups. Therefore, if the antifog layer containing the water repellent groups is used, moisture will ultimately be retained in any of the above-described forms in the antifog layer, but water vapor can diffuse to the bottom portion of the antifog layer as is until it is retained therein. Moreover, water that is once retained dissociates relatively easily and is likely to move to the bottom portion of the antifog layer in the form of water vapor. As a result, the distribution of the retention amount of moisture in the thickness direction of the antifog layer is relatively uniform between the vicinity of the surface and the bottom portion of the antifog layer. That is, the entirety in the thickness direction of the antifog layer can be effectively used to absorb water supplied to the surface of the antifog layer, and therefore, waterdrops are less likely to be formed on the surface through condensation, thus resulting in enhancement of the antifog properties.

On the other hand, with a conventional antifog layer that does not contain the water repellent groups, water vapor that has infiltrated the antifog layer is retained significantly easily in the form of bound water, semibound water, or free water. Therefore, water vapor that has infiltrated the antifog layer tends to be retained in the vicinity of the surface of the antifog layer. As a result, in the antifog layer, the amount of moisture is extremely large in the vicinity of the surface, and rapidly decreases toward the bottom portion of the antifog layer. That is, although the bottom portion of the antifog layer can further absorb water, moisture saturates in the vicinity of the surface of the antifog layer and condenses into waterdrops, and therefore, the antifog properties are limited.

When the water repellent groups are introduced into the antifog layer using the water repellent group-containing hydrolyzable silicon compound (see Formula (I)), a network structure including stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in amounts at which the contact angle of water on the surface of the antifog layer is 70° or more, preferably 80° or more, and even more preferably 90° or more. A measurement value obtained by dropping a 4 mg drop of water onto the surface of the antifog layer is taken as the contact angle of water. In particular, when a methyl group or ethyl group, which has slightly low water repellency, is used as the water repellent group, it is preferable to blend, into the antifog layer, the water repellent groups in amounts at which the contact angle of water is within the above-described range. The upper limit of the contact angle of water is not particularly limited, but is 150° or less, 120° or less, or 105° or less, for example. It is preferable that the water repellent groups are uniformly contained in the antifog layer such that the contact angle of water is within the above-described range over the entire region of the surface of the antifog layer.

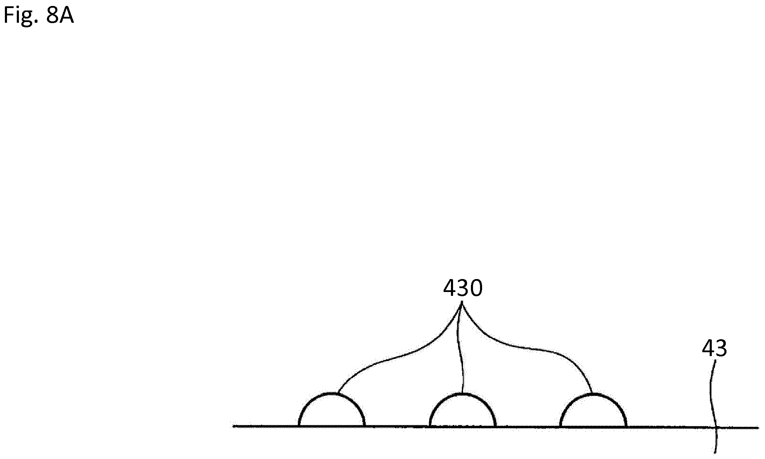

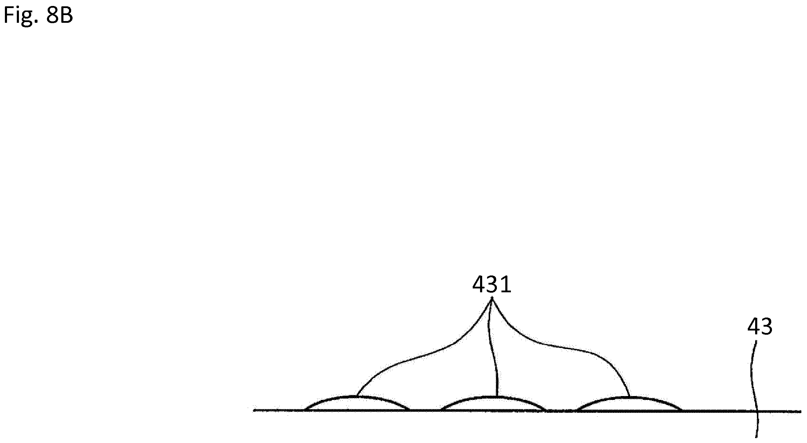

Here, the relationship between the contact angle of water and the antifog layer 43 will be described with reference to FIGS. 8A and 8B. FIGS. 8A and 8B show states in which waterdrops (430, 431) that differ in contact angle are attached to the antifog layer 43. As shown in FIGS. 8A and 8B, the areas of the antifog layer 43 covered with the waterdrops (430, 431) formed on the surface of the antifog layer 43 through condensation of the same amount of water vapor tend to decrease as the contact angle of water on the surface increases. The smaller the areas of the antifog layer 43 covered with the waterdrops (430, 431) are, the smaller the ratio of the areas in which light entering the antifog layer 43 diffuses is. Therefore, the antifog layer 43 in which the contact angle of water increases due to the presence of the water repellent groups is advantageous in that the straightness of transmitted light is maintained in a state in which waterdrops are formed on the surface of the antifog layer.

It is preferable that the antifog layer 43 contains the water repellent groups such that the contact angle of water is within the above-described preferable range. When the water absorbent resin is contained, it is preferable that the antifog layer 43 contains the water repellent groups such that the amount of water repellent groups is within a range of 0.05 parts by mass or more, preferably within a range of 0.1 parts by mass or more, and more preferably within a range of 0.3 parts by mass or more, and within a range of 10 parts by mass or less and preferably within a range of 5 parts by mass or less, with respect to 100 parts by mass of the water absorbent resin.

### Metallic oxide component

Next, the metallic oxide component will be described. The metallic oxide component is a component including an oxide of at least one type of element selected from Si, Ti, Zr, Ta, Nb, Nd, La, Ce, and Sn, for example, and is preferably a component including an oxide of Si (silica component). When the water absorbent resin is contained, it is preferable that the antifog layer 43 contains the metallic oxide component such that the amount of the metallic oxide component is 0.01 parts by mass or more, preferably 0.1 parts by mass or more, more preferably 0.2 parts by mass or more, even more preferably 1 part by mass or more, particularly preferably 5 parts by mass or more, optionally 7 parts by mass or more, and 10 parts by mass or more if necessary, with respect to 100 parts by mass of the water absorbent resin, and 60 parts by mass or less, particularly 50 parts by mass or less, preferably 40 parts by mass or less, more preferably 30 parts by mass or less, even more preferably 20 parts by mass or less, and optionally 18 parts by mass or less. The metallic oxide component is necessary for ensuring the strength of the antifog layer, particularly scratch resistance, but if the content of the metallic oxide component is excessively large, the antifog properties of the antifog layer are impaired.

At least a portion of the metallic oxide component may be derived from a hydrolyzable metallic compound or a hydrolysate thereof added to a coating solution for forming an antifog layer. Here, the hydrolyzable metallic compound is at least one selected from a) a metallic compound (water repellent group-containing hydrolyzable metallic compound) containing a water repellent group and a hydrolyzable functional group or a halogen atom, and b) a metallic compound that does not contain a water repellent group and contains a hydrolyzable functional group or halogen atom (water repellent group-free hydrolyzable metallic compound). The metallic oxide component derived from the compounds of a) and/or b) is an oxide of the metallic atoms included in the hydrolyzable metallic compound. The metallic oxide component may include a metallic oxide component derived from minute particles of a metallic oxide added to a coating solution for forming an antifog layer, and a metallic oxide component derived from a hydrolyzable metallic compound or a hydrolysate thereof added to the coating solution. Also here, the hydrolyzable metallic compound is at least one compound selected from the compounds of a) and b) above. The compound of b) above, namely the hydrolyzable metallic compound containing no water repellent groups, may include at least one of tetraalkoxysilane and a silane coupling agent. Hereinafter, excluding the compound of a) above, which has been already described, the minute particles of a metallic oxide and the compound of b) above will be described.

### Minute particles of metallic oxide

The antifog layer 43 may further contain minute particles of a metallic oxide as at least a portion of the metallic oxide component. The metallic oxide constituting the minute particles of a metallic oxide is an oxide of at least one type of element selected from Si, Ti, Zr, Ta, Nb, Nd, La, Ce, and Sn, for example, with minute particles of silica being preferable. The minute particles of silica can be introduced into the antifog layer by adding colloidal silica thereto, for example. The minute particles of a metallic oxide excel at transmitting stress applied to the antifog layer to a transparent article that supports the antifog layer, and also have high hardness. Therefore, the addition of the minute particles of a metallic oxide is advantageous from the viewpoint of enhancing the abrasion resistance and scratch resistance of the antifog layer. Moreover, when the minute particles of a metallic oxide are added to the antifog layer, minute voids are formed in portions where the minute particles are in contact with one another or close to one another, and water vapor is likely to become trapped in the antifog layer through these voids. Accordingly, the addition of the minute particles of a metallic oxide may advantageously act to enhance the antifog properties . Minute particles of a metallic oxide that have been formed in advance are added to a coating solution for forming an antifog layer, and the minute particles of a metallic oxide can thus be supplied to the antifog layer.

When the average particle diameter of the minute particles of a metallic oxide is excessively large, the antifog layer may be opaque, whereas when the average particle diameter of the minute particles of a metallic oxide is excessively small, the minute particles aggregate, thus making it difficult to uniformly disperse the minute particles. From this viewpoint, the average particle diameter of the minute particles of a metallic oxide is preferably 1 to 20 nm, and particularly preferably 5 to 20 nm. It should be noted that the average particle diameter of the minute particles of a metallic oxide in the form of primary particles is taken as the average particle diameter of the minute particles of a metallic oxide described herein. The average particle diameter of the minute particles of a metallic oxide is determined by measuring, through observation using a scanning electron microscope, the particle diameters of fifty randomly selected minute particles and employing the average value thereof. If the content of the minute particles of a metallic oxide is excessively large, there is a risk that the amount of water absorption will decrease in the entire antifog layer, and thus the antifog layer becomes opaque. When the antifog layer contains the water absorbent resin, it is preferable to add the minute particles of a metallic oxide such that the amount thereof is 0 to 50 parts by mass, preferably 1 to 30 parts by mass, more preferably 2 to 30 parts by mass, even more preferably 5 to 25 parts by mass, and optionally 10 to 20 parts by mass, with respect to 100 parts by mass of the water absorbent resin.

### Hydrolyzable metallic compound containing no water repellent groups

In addition, the antifog layer 43 may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (it should be noted that a water repellent group is not contained) selected from silicon alkoxide, chlorosilane, acetoxysilane, alkenyloxysilane, and aminosilane, with silicon alkoxide that does not contain a water repellent group being preferable. It should be noted that an example of the alkenyloxysilane is isopropenoxysilane.

The hydrolyzable silicon compound that does not contain a water repellent group may be a compound represented by Formula (III) below.

SiY₄ (III)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are linked is supplied. This component firmly joins the minute particles of a metallic oxide and the water absorbent resin, and may contribute to the enhancement of the abrasion resistance, hardness, water resistance, and the like of the antifog layer. When the antifog layer contains the water absorbent resin, it is preferable to set the amount of the metallic oxide component derived from the hydrolyzable metallic compound that does not contain a water repellent group to be within a range of 0 to 40 parts by mass, preferably 0.1 to 30 parts by mass, more preferably 1 to 20 parts by mass, even more preferably 3 to 10 parts by mass, and optionally 4 to 12 parts by mass, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane, for example.

If the content of the metallic oxide (silica) component derived from tetraalkoxysilane is excessively large, the antifog properties of the antifog layer may be impaired. One reason for this is that the flexibility of the antifog layer is impaired, and thus the swelling and shrinkage of the antifog layer caused by the absorption and discharge of moisture are limited. When the antifog layer contains the water absorbent resin, it is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly linked to a silicon atom has 1 to 3 carbon atoms. Since a glycidyloxyalkyl group and an aminoalkyl group contain a hydrophilic functional group (epoxy group, amino group), they are not water-repellent as a whole even though they contain an alkylene group.

The silane coupling agent firmly couples the water absorbent resin, which is an organic component, and the minute particles of a metallic oxide and the like, which are inorganic components, and may contribute to the enhancement of the abrasion resistance, hardness, water resistance, and the like of the antifog layer. However, when the content of the metallic oxide (silica) component derived from the silane coupling agent is excessively large, the antifog properties of the antifog layer are impaired, and the antifog layer may become opaque in some cases. When the antifog layer contains the water absorbent resin, it is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-linked structure

In addition, the antifog layer 43 may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog layer. From another viewpoint, the introduction of the cross-linked structure facilitates the improvement of the durability of the antifog layer without impairing the antifog performance.

When the cross-linked structure formed using a cross-linking agent is introduced into the antifog layer in which the metallic oxide component is a silica component, the antifog layer may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is at least one selected from a titanium alkoxide, a titanium chelate-based compound, and titanium acylate, for example. Examples of the titanium alkoxide include titanium tetraisopropoxide, titanium tetra-n-butoxide, and titanium tetraoctoxide. Examples of the titanium chelate-based compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate-based compound, particularly titanium lactate.

When the water absorbent resin is polyvinyl acetal, a preferable cross-linking agent is an organic titanium compound, particularly titanium lactate.

### Other optional components

Other additives may also be blended into the antifog layer 43. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as the additives. If a surfactant is blended into materials of the antifog layer 43, liquid that is applied onto the film substrate 42 to form the antifog layer 43 can easily spread over the film substrate 42. Therefore, irregularities are unlikely to be formed in the surface of the resultant antifog layer 43, and distortion of the antifog layer 43 can be suppressed. As a result, an antifog film that is suitable for attachment to the information acquisition region 3 can be provided. It is possible to use, as the surfactant, BYK-323, BYK-333, BYK-342, BYK-377, and BYK-3455, which are manufactured by BYK; KP-109, KP-110, and KP-112, which are manufactured by Shin-Etsu Chemical Co., Ltd.; and TSF4440, TSF4452, and TSF4450, which are manufactured by Momentive.

A preferable embodiment of the antifog layer 43 has a configuration as described below. That is, it is preferable that the antifog layer 43 contains 0.1 to 60 parts by mass of the metallic oxide component and 0.05 to 10 parts by mass of the water repellent groups, with respect to 100 parts by mass of the water absorbent resin. At this time, the water repellent groups may be chain alkyl groups having 1 to 8 carbon atoms and be directly linked to metallic atoms included in the metallic oxide component, and the metallic atoms may be silicon atoms. Moreover, at least a portion of the metallic oxide component may be derived from a hydrolyzable metallic compound or a hydrolysate of the hydrolyzable metallic compound that is added to a coating solution for forming an antifog layer, and the hydrolyzable metallic compound may be at least one selected from a hydrolyzable metallic compound that contains a water repellent group and a hydrolyzable metallic compound that does not contain a water repellent group. Furthermore, the hydrolyzable metallic compound that does not contain a water repellent group may include at least one selected from tetraalkoxysilane and silane coupling agents. If the antifog layer 43 is configured as described above, fogging of the information acquisition region 3 can be suppressed, and consequently the camera 8 can appropriately capture an image of the outside of the vehicle.

An example of the above-described antifog layer 43 can be obtained as follows. First, 87.5 mass% of a solution containing a polyvinyl acetal resin ("S-LEC KX-5" manufactured by Sekisui Chemical Co., Ltd.; a solid content is 8 mass%, the degree of acetalization is 9 mol%, and an acetal structure derived from benzaldehyde is included), 0.526 mass% of n-hexyltrimethoxysilane (HTMS, "KBM-3063" manufactured by Shin-Etsu Chemical Co., Ltd.), 0.198 parts by mass of 3-glycidoxypropyltrimethoxysilane (GPTMS, "KBM-403" manufactured by Shin-Etsu Chemical Co., Ltd.), 2.774 mass% of tetraethoxysilane (TEOS, "KBE-04" manufactured by Shin-Etsu Chemical Co., Ltd.), 5.927 mass% of an alcohol solvent ("Solmix AP-7" manufactured by Alcohol Trading Co., Ltd.), 2.875 mass% of purified water, 0.01 mass% of hydrochloric acid serving as an acid catalyst, and 0.01 mass% of a leveling agent ("KP-341" manufactured by Shin-Etsu Chemical Co., Ltd.) are placed in a glass container, and stirred at room temperature (25°C) for 3 hours. Thus, a coating solution for forming the antifog layer 43 can be prepared.

### (B) Film substrate

Next, the film substrate 42 will be described. The film substrate 42 is a layer that serves as a substrate for the antifog film 4 and holds the antifog layer 43 and the adhesive layer 41 on respective surfaces thereof. The material of the film substrate 42 may be selected as appropriate according to the embodiment. For example, a transparent resin sheet made of polyethylene, polyethylene terephthalate, or the like can be used as the film substrate 42.

It should be noted that, if the bond between the film substrate 42 and the antifog layer 43 is weak, the film substrate 42 and the antifog layer 43 may separate from each other due to aging or the like. Further, in this embodiment, the protective film 50 is attached to the antifog layer 43 before the antifog film 4 is to be used, and the protective film 50 is removed from the antifog layer 43 when the antifog film 4 is to be used. Accordingly, when the protective film 50 is removed from the antifog layer 43, a large tensile force and a large shear force may act on the antifog layer 43 and the antifog layer 43 may separate from the film substrate 42. Therefore, if resin materials are used for the film substrate 42 and the antifog layer 43, it is preferable that the resin material (second resin material) of the film substrate 42 has affinity to the resin material (first resin material) contained in the antifog layer 43. In this case, the film substrate 42 and the antifog layer 43 can be firmly bonded together to keep the antifog layer 43 from separating from the film substrate 42.

It is also preferable that the film substrate 42 is made of a material that has a heat conductivity of 5×10⁻⁴ cal/cm·sec·°C or less. An example of materials that satisfy this condition is COSMOSHINE A4300 (TOYOBO Co., Ltd.). If the antifog layer 43 is of the above-described water absorbent type, for example, the antifog properties of the antifog layer 43 are impaired when the temperature around the antifog film 4 decreases. Further, the antifog film 4 is usually attached to a surface that is often located in a warm environment out of opposite surfaces of a glass plate, such as the vehicle interior side surface of the glass plate 1 for automobiles described later. In this case, if heat can easily dissipate from the surface of the glass plate to which the antifog film 4 is attached toward the other surface, cooling down of the vicinity of the antifog film 4 is facilitated and the antifog function of the antifog layer 43 tends to be impaired. However, if the substrate film 42 is made of a material having a thermal conductivity of 5×10⁻⁴ cal/cm·sec·°C or less, heat hardly dissipates from the surface to which the antifog film 4 is attached toward the other surface and impairment of the antifog function of the antifog film 4 can be suppressed.

### (C) Adhesive layer

Next, the adhesive layer 41 will be described. The adhesive layer 41 is a layer for bonding the antifog film 4 to an object. The material of the adhesive layer 41 may be selected as appropriate according to the embodiment. For example, the adhesive layer 41 may be formed using a transparent adhesive such as an acrylic adhesive or a silicone-based adhesive.

The hardness of the adhesive layer 41 may be determined as appropriate according to the embodiment. However, if a soft material is used for the adhesive layer 41, the adhesive layer 41 is likely to plastically deform and the thickness of the adhesive layer 41 is likely to become uneven when the release sheet 51 is removed or the antifog film 4 is attached to the glass plate 1, for example. Therefore, the adhesive layer 41 is preferably configured such that the loss tangent tanδ of dynamic viscoelasticity of the adhesive layer at 25°C is no greater than 0.5. The loss tangent tanδ of dynamic viscoelasticity of the adhesive layer 41 at 25°C is more preferably set to no greater than 0.4, and even more preferably set to no greater than 0.3. Thus, the adhesive layer 41 can be made harder to make the adhesive layer 41 unlikely to plastically deform, in other words, to make the thickness of the adhesive layer 41 unlikely to become uneven, when the release sheet 51 is removed or the antifog film 4 is attached, for example. Note that the loss tangent tanδ of dynamic viscoelasticity is the ratio of a loss modulus to a storage modulus. The loss tangent of dynamic viscoelasticity can be measured using a rheometer (for example, AR2000ex manufactured by TA Instruments). In order to attain the loss tangent tanδ of dynamic viscoelasticity in the above-described range, any of the following methods can be employed, for example. That is, reducing the thickness of the adhesive layer 41, increasing the amount of a curing agent added to the adhesive layer 41, and using a material that has a relatively large molecular weight for the adhesive layer 41. However, the loss tangent tanδ of dynamic viscoelasticity of the adhesive layer 41 at 25°C is not limited to the above-described example. The loss tangent tanδ of dynamic viscoelasticity of the adhesive layer 41 at 25°C may be greater than 0.5. Although the thickness of the adhesive layer 41 is likely to become uneven in this case, even if the thickness of the adhesive layer 41 becomes uneven, perspective distortion that may occur in the glass plate 1 to which the antifog film 4 is attached can be suppressed in this embodiment as a result of the thickness of the film substrate 42 being set to no greater than 100 µm as described later, for example.

Also, a substance that has a molecular weight of greater than a million may be contained in the adhesive layer 41 to make the adhesive layer unlikely to plastically deform. In this case, the adhesive layer 41 is unlikely to plastically deform and accordingly the thickness of the adhesive layer 41 is unlikely to become uneven when the release sheet 51 is removed or the antifog film 4 is attached, for example. However, the material of the adhesive layer 41 is not limited to this example, and the adhesive layer may contain a substance that has a molecular weight of no greater than a million. If the adhesive layer 41 contains a substance that has a molecular weight of no greater than a million, particularly, no greater than 500,000, the adhesive layer 41 is likely to plastically deform when the antifog film 4 is attached, and the thickness of the adhesive layer 41 is likely to become uneven. However, even if the thickness of the adhesive layer 41 becomes uneven, perspective distortion that may occur in the glass plate 1 to which the antifog film 4 is attached can be suppressed in this embodiment as a result of the thickness of the film substrate 42 being set to no greater than 100 µm as described later, for example. Examples of substances that have a molecular weight of no greater than a million include acrylic acid copolymers, epoxy resin, and urethane resin.

### (D) Manufacturing method

Next, a manufacturing method of the above-described antifog film 4 will be described. The antifog film 4 can be manufactured as described below, for example. That is, the film substrate 42 is prepared and the antifog layer 43 is formed on one surface of the prepared film substrate 42. Next, the film substrate 42 is cut into a sheet, and then high-temperature and high-humidity treatment (temperature: 70 to 90°C, humidity: 80 to 100%, time: 20 to 40 minutes) or high-temperature treatment (temperature: 100 to 120°C, time: 20 to 30 minutes) is performed. Next, the adhesive layer 41 is formed by applying an adhesive onto another surface of the film substrate 42. Thus, the antifog film 4 can be manufactured.

The antifog layer 43 can be formed by applying a coating solution (liquid) for forming the antifog layer 43 onto the film substrate 42, drying the film substrate onto which the coating solution has been applied, and further performing high-temperature and high-humidity treatment or the like as needed. It is sufficient that a known material and a known method are respectively used as the solvent to be used for the preparation of the coating solution and a method for applying the coating solution.

In the step of applying the coating solution, the atmosphere is preferably kept at a relative humidity of less than 40%, and more preferably 30% or less. Keeping the atmosphere at a low relative humidity makes it possible to prevent the layer from absorbing an excessive amount of moisture from the atmosphere. If a large amount of moisture is absorbed from the atmosphere, there is a risk that water will enter and remain in the matrix of the layer and deteriorate the strength of the layer.

It is preferable that the step of drying the film substrate onto which the coating solution has been applied includes an air-drying step and a heat-drying step for performing drying through heating. It is preferable to perform the air-drying step by exposing the coating solution to an atmosphere that is kept at a relative humidity of less than 40%, and more preferably 30% or less. The air-drying step can be performed as a non-heating step. In other words, it can be performed at room temperature. When the coating solution contains a hydrolyzable silicon compound, in the heat-drying step, dehydration progresses with silanol groups contained in the hydrolysates of silicon compounds or the like and hydroxy groups present on a transparent article contributing thereto, and a matrix structure (network of Si-O bonds) including silicon atoms and oxygen atoms develops.

In order to prevent the decomposition of organic substances such as the water absorbent resin, it is preferable that the temperature applied in the heat-drying step is not excessively high. In this case, an appropriate heating temperature is 300°C or lower, for example, 100 to 200°C, and the heating time is 1 minute to 1 hour.

A high-temperature and high-humidity treatment step may be performed as appropriate when forming the antifog layer 43. Performing the high-temperature and high-humidity treatment step may further facilitate the realization of both the antifog properties and the strength of the layer. The high-temperature and high-humidity treatment step can be performed by holding the film substrate with the coating solution applied thereon in an atmosphere at 50 to 100°C at a relative humidity of 60 to 95% for 5 minutes to 1 hour, for example. The high-temperature and high-humidity treatment step may be performed after the application step and the drying step, or after the application step and the air-drying step and before the heat-drying step. In particular, in the former case, a heat-treatment step may be additionally performed after the high-temperature and high-humidity treatment step. This additional heat-treatment step can be performed by holding the film substrate with the coating solution applied thereon in an atmosphere at 80 to 180°C for 5 minutes to 1 hour, for example.

Note that the antifog layer 43 formed from the coating solution may be washed and/or wiped with a moist cloth as needed. Specifically, this can be performed by exposing the surface of the antifog layer 43 to a stream of water or wiping it with a cloth containing water. Pure water is suitable as the water used in these steps. It is preferable to avoid using a solution containing a detergent for washing. With this step, dust, dirt, and the like attached to the surface of the antifog layer 43 are removed, and a clean coating surface can thus be obtained.

### (E) Thickness

Next, the thicknesses of the respective layers will be described. In this embodiment, the thickness D1 of the film substrate 42 is set to no greater than 100 µm to shorten the path of light passing through the film substrate. Preferably, the thickness D1 of the film substrate 42 is set to no greater than 50 µm. On the other hand, the lower limit of the thickness D1 of the film substrate 42 need not be particularly limited, but if the film substrate 42 is too thin, the rigidity of the antifog film 4 decreases and it may be difficult to attach the antifog film 4 to the glass plate 1. From this viewpoint, the thickness D1 of the film substrate 42 can be set to at least 5 µm, preferably at least 10 µm, and even more preferably at least 20 µm.

The thickness D2 of the adhesive layer 41 may be selected as appropriate according to the embodiment. However, if the adhesive layer 41 is thick, the adhesive layer 41 will have irregularities with a large difference in height when the thickness of the adhesive layer 41 becomes uneven, and the antifog layer 4 attached to the glass plate 1 is likely to be distorted due to the irregularities. From this viewpoint, the thickness D2 of the adhesive layer 41 can be preferably set to no greater than 100 µm, more preferably no greater than 50 µm, and even more preferably no greater than 30 µm. Although a total thickness (D1 + D2) of the film substrate 42 and the adhesive layer 41 may be selected as appropriate according to the embodiment, the total thickness is preferably no greater than 200 µm, and more preferably no greater than 150 µm. Further, the thickness D2 of the adhesive layer 41 is preferably smaller than the thickness D1 of the film substrate 42.

It should be noted that, in this embodiment, the antifog film 4 is attached to the fourth surface, which is the recessed surface of the glass plate 1, and therefore if the adhesiveness of the adhesive layer 41 is reduced as a result of the thickness of the adhesive layer 41 being reduced, the antifog film 4 is particularly easy to peel off from the glass plate 1. On the other hand, if the adhesiveness of the adhesive layer 41 is set high, the thickness of the adhesive layer 41 increases accordingly, and the antifog film 4 attached to the glass plate 1 is likely to be distorted when the thickness of the adhesive layer 41 becomes uneven as described above. Furthermore, in this embodiment, the release sheet 51 is removed from the adhesive layer 41 at the time of use, and accordingly if the adhesive layer 41 has high adhesiveness, a large tensile force and a large shear force may act on the adhesive layer 41 when the release sheet 51 is removed and consequently the adhesive layer 41 may have a large variation in thickness. Therefore, the adhesive layer 41 may be configured to have an adhesiveness of 0.1 to 50 N when measured using a test method specified in JIS Z 0237. The adhesiveness of the adhesive layer 41 may be set preferably to 0.3 to 30 N, and more preferably to 0.5 to 20 N. The adhesiveness of the adhesive layer 41 can be appropriately adjusted by using an acrylic acid or the like as the material, changing the molecular weight of the material, adjusting a blend ratio of the material, selecting a curing agent to be added, or changing the thickness of the adhesive layer, for example. It should be noted that, in the test method specified in JIS Z 0237 mentioned above, a stainless steel plate is used as a test plate to which a subject of measurement of the adhesiveness is attached. However, instead of the stainless steel plate, a glass plate is used in this embodiment as the test plate in the above-described test method. That is, the above-described range is defined as the range of the adhesiveness measured using the glass plate as the test plate and following the other conditions specified in JIS Z 0237.

The thickness D3 of the antifog layer 43 may be adjusted as appropriate according to required antifog characteristics or the like. For example, if the antifog film 4 is used in the information acquisition region 3 of the windshield 100 described later, the thickness D3 of the antifog layer 43 may be set in a range of 1 to 20 µm, preferably in a range of 2 to 15 µm, and even more preferably in a range of 3 to 10 µm.

### (F) Shape and dimensions in plan view

Next, the shape of the antifog film 4 and its dimensions in plan view will be described. As illustrated in FIGS. 1 and 4, the antifog film 4 in this embodiment has a rectangular shape in plan view and four corner portions of the antifog film are rounded. Thus, the antifog film 4 is made unlikely to peel off from a vehicle interior side surface of the information acquisition region 3.

Dimensions of the antifog film 4 in plan view are larger than dimensions of the information acquisition region 3 in plan view and smaller than dimensions of the opening 23 of the blocking layer 2 in plan view. For example, the dimensions of the antifog film 4 in plan view may be set smaller than the dimensions of the opening 23 in plan view by 2 mm in both the vertical direction and the horizontal direction.

### Release sheet

Next, the release sheet 51 will be described. The release sheet 51 is a sheet for protecting the adhesive layer 41 from adhesion of foreign matter (dust or the like) until the antifog film 4 is to be used.

As shown in FIG. 6, dimensions of the release sheet 51 according to this embodiment in plan view are larger than dimensions of the antifog film 4 in plan view. For example, the dimensions of the release sheet 51 in plan view may be set larger than the dimensions of the antifog film 4 in plan view by 5 mm in both the vertical direction and the horizontal direction. Thus, the release sheet 51 is configured to include a portion extending from the antifog film 4 in plan view, and can be easily removed from the antifog film 4 (adhesive layer 41) using the extended portion.

In this embodiment, the release sheet 51 is divided into two sheet pieces 510 by a slit 511 provided at the center. This also facilitates removal of the release sheet 51 from the adhesive layer 41. Also, each of the sheet pieces 510 is smaller than a release sheet that is formed as a single sheet piece, and accordingly the shear force that acts on the adhesive layer 41 when each sheet piece 510 is removed can be reduced to keep the thickness of the adhesive layer 41 from becoming uneven. Furthermore, the adhesive layer 41 can be exposed partially, rather than entirely at once, by removing the sheet pieces 510 in order. Therefore, the antifog film 4 can be easily attached to the glass plate by attaching thus exposed portions of the adhesive layer 41 to desired positions on the glass plate in order.

The material of the release sheet 51 may be selected as appropriate according to the embodiment. For example, a plastic film, paper, or the like can be used as the release sheet 51. The release sheet 51 may have a silicone layer on its front surface, namely a surface on the adhesive layer 41 side. If the silicone layer is provided on the front surface, the release sheet 51 can be easily removed from the adhesive layer 41. Specifically, the peel force of the release sheet 51 when it is removed from the adhesive layer 41 can be set to no greater than 300 mN/50 mm, preferably no greater than 250 mN/50 mm, and even more preferably no greater than 200 mN/50mm. In this case, the shear force that is applied to the adhesive layer 41 from the release sheet 51 when the release sheet 51 is removed from the adhesive layer 41 can be reduced to keep the thickness of the adhesive layer from becoming uneven. The peel force of the release sheet 51 can be determined by attaching a tape No. 31B manufactured by Nitto Denko Corporation and measuring a force when the sheet is peeled at a speed of 300 mm/min and at an angle of 180°.

### Protective film

Next, the protective film 50 will be described. The protective film 50 is a film material for protecting the antifog layer 43 of the antifog film 4. The material of the protective film 50 may be selected as appropriate according to the embodiment. For example, a transparent sheet material made of plastic or the like can be used as the protective film 50.

In this embodiment, the thickness D4 of the protective film 50 is set larger than the thickness D1 of the film substrate 42 as shown in FIG. 6. The thickness D4 of the protective film 50 that is larger than the thickness D1 of the film substrate 42 can be set in a range of 10 to 300 µm, for example. Preferably, the thickness D4 of the protective film 50 can be set in a range of 50 to 200 µm. In this case, even if the thickness of the film substrate 42 is reduced, the rigidity of the antifog film 4 can be increased as a result of the protective film 50 that is thicker than the film substrate 42 being attached.

In this embodiment, dimensions of the protective film 50 in plan view are larger than dimensions of the antifog film 4 in plan view. For example, the protective film 50 may have a length and a width that are larger than those of the film substrate 42 of the antifog film 4 in plan view by about 15 mm. Thus, the protective film 50 is configured to include a portion extending from the antifog film 4 in plan view, and can be easily removed from the antifog film 4 (antifog layer 43) using the extended portion.

The protective film 50 is attached on the antifog layer 43 of the antifog film 4 via a slightly adhesive layer 501. The slightly adhesive layer 501 is less adhesive than ordinary adhesive layers, and is formed using a gluing agent made of resin that contains an acrylic ester, a methacrylic ester, an ester of a polyurethane polyether or the like, a synthetic rubber, a natural rubber, or the like as a main component. The adhesiveness of the slightly adhesive layer 501 is preferably no greater than 30 N/ 25 mm, for example. The thickness of the slightly adhesive layer 501 is preferably no greater than 25 µm. The slightly adhesive layer 501 need not have reworkability (i.e., a repeatedly attachable function). If this slightly adhesive layer 501 is used, the gluing agent constituting the slightly adhesive layer 501 is unlikely to remain on the antifog layer 43 when the protective film 50 is removed from the antifog film 4. Therefore, impairment of the antifog function due to the gluing agent remaining on the antifog layer 43 can be prevented.

### Information acquisition device

Next, the camera 8 will be described. The camera 8 is one example of the information acquisition device that is disposed inside the vehicle. The camera 8 includes an image sensor such as a charge coupled device (CCD) or a complementary MOS (CMOS), and a lens system, and is capable of capturing an image of the outside of the vehicle through the information acquisition region 3. An image captured by the camera 8 is sent to an image processing device (not shown).

The image acquisition device analyzes the type of a subject based on the image captured by the camera 8. The type of the subject can be presumed by a known image analysis method such as pattern recognition. The image processing device is configured as a computer that includes a storage unit, a control unit, an input and output unit, and the like, and is capable of performing image analysis as described above and presenting an analysis result to a user (driver). The image processing device may be a general-purpose device such as a personal computer (PC), a tablet terminal, or the like, as well as a device specifically designed for a service to be provided.

### Bracket and cover

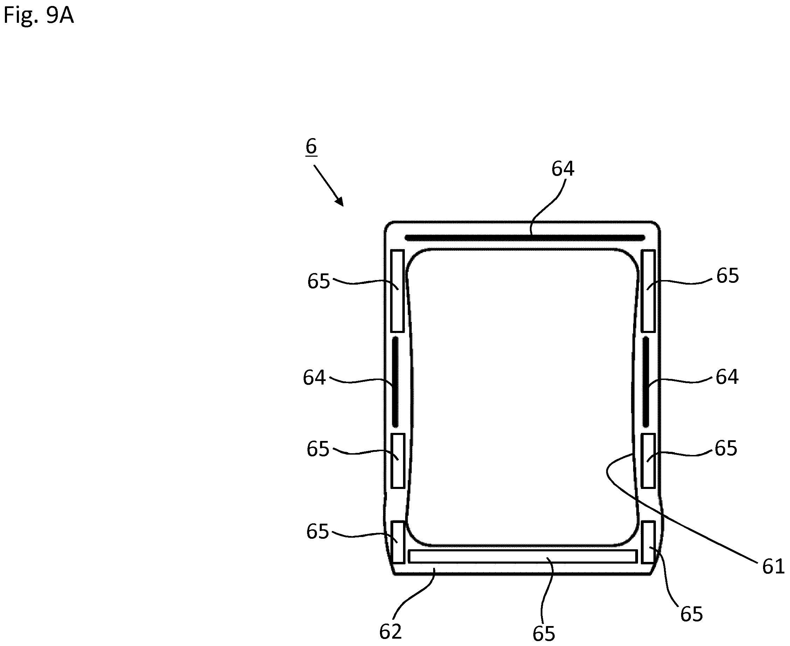

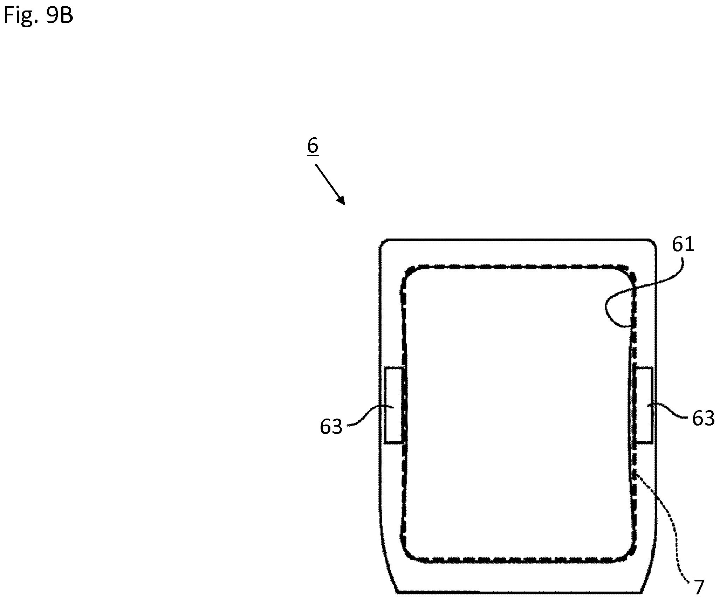

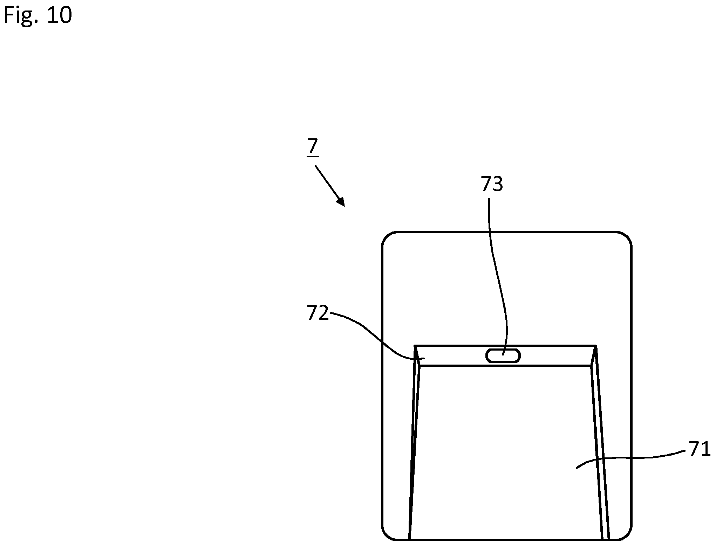

Next, the bracket 6 and the cover 7 for attaching the above-described camera 8 to the windshield 100 will be described with further reference to FIGS. 9A, 9B, and 10. FIG. 9A schematically illustrates the state of the vehicle exterior side of the bracket 6 according to this embodiment. FIG. 9B schematically illustrates the state of the vehicle interior side of the bracket 6 according to this embodiment. FIG. 10 schematically illustrates the cover 7 according to this embodiment.

As illustrated in FIGS. 9A and 9B, the bracket 6 in this embodiment has the shape of a rectangular frame that has an attachment opening 61 in which the cover 7 that holds the camera 8 is arranged. The bracket 6 includes a rectangular main body portion 62 that surrounds the attachment opening 61 and support portions 63 that are arranged on opposite sides of the main body portion 62 to fix the cover 7.

As shown in FIGS. 1 and 2, the bracket 6 is arranged in the surrounding region of the opening 23 of the blocking layer 2. The main body portion 62 has a flat surface to which an adhesive 64 and a piece of double sided tape 65 are attached. The main body portion 62 is attached to the blocking layer 2 (protruding portion 22) or the glass plate 1 using the adhesive 64 and the double sided tape 65. Thus, the bracket 6 is fixed such that the entirety or at least a portion of the bracket is shielded by the blocking layer 2 (protruding portion 22).

The types of the adhesive 64 and the double sided tape 65 need not be particularly limited, and may be selected as appropriate according to the embodiment. For example, a urethane resin adhesive, an epoxy resin adhesive, or the like can be used as the adhesive 64. A known double sided tape can be used as the double sided tape 65. It should be noted that the arrangement of the adhesive 64 and the double sided tape 65 shown in FIG. 9A is an example and any other arrangement may be employed.

As described above, the bracket 6 is fixed around the opening 23 of the blocking layer 2 with the adhesive 64 and the double sided tape 65. After a harness (not shown) or the like is attached, the cover 7 holding the camera 8 is attached to the bracket 6 from the vehicle interior side as illustrated in FIG. 2. Thus, the camera 8 is accommodated in a space surrounded by the bracket 6, the cover 7, and the glass plate 1.

As shown in FIG. 10, the cover 7 has a rectangular shape, is supported by the support portions 63 of the bracket 6, and is arranged to cover the attachment opening 61. The cover 7 includes a housing having a surface that faces the glass plate 1 through the attachment opening 61 and in which a recess 71 is formed. The recess 71 is inclined such that its depth is largest at its upper end and decreases toward its lower end, and a lens 73 of the camera 8 is arranged on a wall surface 72 at the upper end of the recess. The lens 73 is appropriately positioned to correspond to the information acquisition region 3 (opening 23) .

Accordingly, when the cover 7 is attached to the bracket 6, the camera 8 is disposed inside the vehicle in a state where it is supported by the bracket 6 and the cover 7, and can acquire information regarding the outside of the vehicle through the information acquisition region 3 (opening 23). In this embodiment, the camera 8 is disposed within a distance of 300 mm from the information acquisition region 3. Specifically, the camera 8 is disposed such that the distance S shown in FIGS. 2 and 7 is no greater than 300 mm. The distance S is defined as a distance between the vehicle interior side surface of the glass plate 1 (surface of the antifog film 4 on the antifog layer 43 side) at the center of the information acquisition region 3 and an end face of the camera 8. The distance S may be set to no greater than 200 mm or no greater than 100 mm. It should be noted that, if light enters the attachment opening 61 from the outside, shooting by the camera 8 may be adversely affected. Therefore, it is preferable to provide light shield members such as the adhesive 64 and the double sided tape 65 to surround the recess 71. The above-described bracket 6 and cover 7 can be appropriately manufactured by known processing methods.

### §2 Manufacturing method

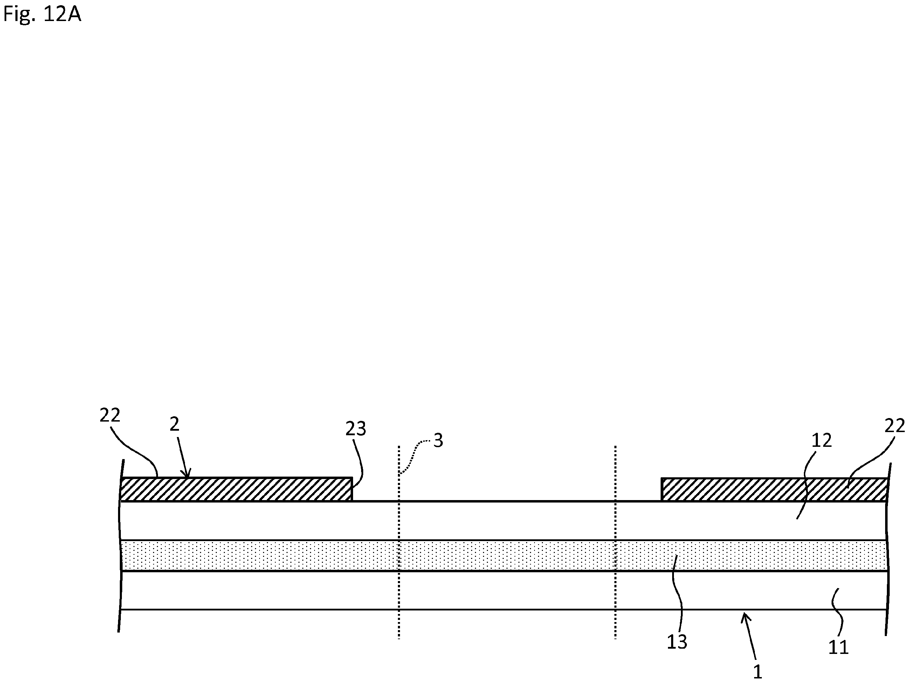

Next, a method for manufacturing the above-described windshield 100 will be described with reference to FIGS. 11 and 12A to 12F. FIG. 11 schematically illustrates a manufacturing line of the glass plate 1 according to this embodiment. FIGS. 12A to 12F schematically illustrate a process for attaching the antifog film 4 to the vehicle interior side surface (fourth surface) of the information acquisition region 3. It should be noted that the following manufacturing process of the windshield 100 is merely an example and each step can be changed where possible. Also, a step can be omitted, replaced, or added in the following manufacturing process as appropriate according to the embodiment.

### First step

In the first step, the glass plate 1 is prepared. In this embodiment, the glass plate 1 can be prepared by manufacturing the glass plate 1 using the manufacturing line illustrated in FIG. 11. The manufacturing line illustrated in FIG. 11 includes a ring-shaped mold 200, a conveyance table 201 that conveys the mold 200, a heating furnace 202, and an annealing furnace 203.

Glass plates (11 and 12) each having the shape of a flat plate are prepared and the plates (11 and 12) are cut into a predetermined shape before they are placed on the mold 200. Then, ceramic that constitutes the blocking layer 2 is printed (applied) on the vehicle interior side surface (fourth surface) of the inner glass plate 12 using screen printing or the like.

Subsequently, the ceramic printed in respective regions is appropriately dried. After the ceramic has been dried, the outer glass plate 11 and the inner glass plate 12 are superimposed such that the second surface and the third surface face each other to form a laminated glass 10 having the shape of a flat plate. Then, the formed laminated glass 10 having the shape of a flat plate is placed on the mold 200.

The mold 200 is placed on the conveyance table 201, and the conveyance table 201 passes through the heating furnace 202 and the annealing furnace 203 in this order with the laminated glass 10 placed on the mold 200. When the glass plates (11 and 12) are heated to around the softening point within the heating furnace 202, the glass plates are molded into a curved shape as a result of portions inward of peripheral portions curving downward under their own weight. Subsequently, the glass plates (11 and 12) are conveyed from the heating furnace 202 to the annealing furnace 203 to be subjected to annealing treatment, thereafter conveyed out of the annealing furnace 203, and cooled.

After the glass plates (11 and 12) are molded as described above, the interlayer 13 is sandwiched between the glass plates (11 and 12) to form a laminate constituted by the glass plates (11 and 12) and the interlayer 13. The laminate is placed into a rubber bag and preliminarily bonded together at about 70 to 110°C under vacuum suction. The method of preliminary bonding may be selected as appropriate according to the embodiment.

Next, permanent bonding is performed. The preliminarily bonded laminate is permanently bonded using an autoclave at a pressure of 8 to 15 atmospheres and at 100 to 150°C, for example. Specifically, permanent bonding can be performed under the conditions of a pressure of 14 atmospheres and 135°C, for example. Through the above-described preliminary bonding and permanent bonding, the glass plates (11 and 12) are bonded together with the interlayer 13 sandwiched therebetween. Thus, the glass plate 1 provided with the blocking layer 2 having the opening 23 as illustrated in FIG. 12A can be manufactured.

### Second step

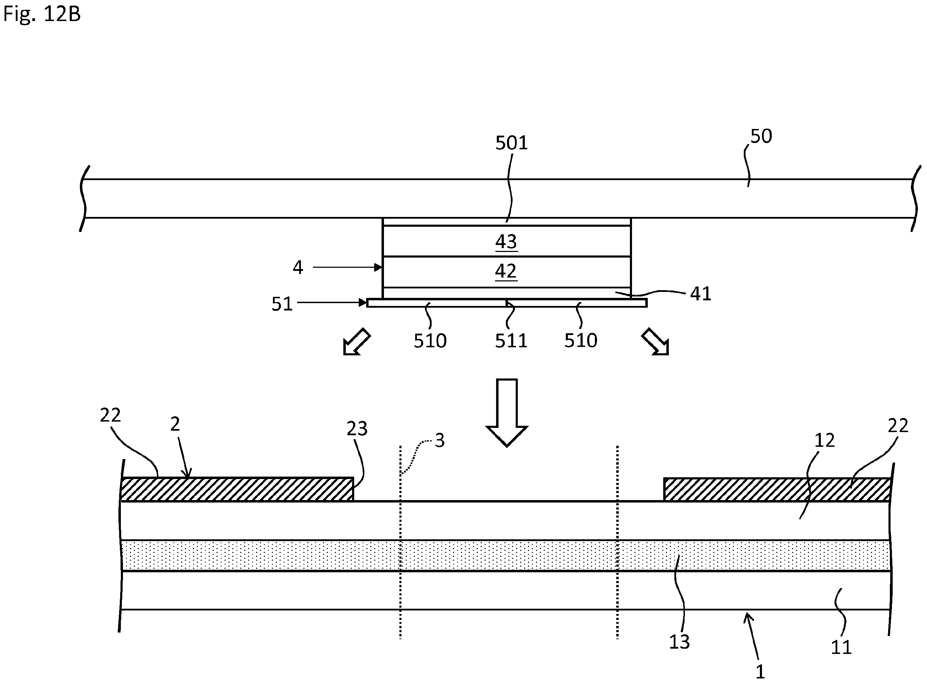

Next, the antifog film 4 is prepared in the second step. As shown in FIG. 12B, the antifog film 4 prepared in this embodiment includes the release sheet 51 attached to the adhesive layer 41 and the protective film 50 attached to the antifog layer 43.

### Third step

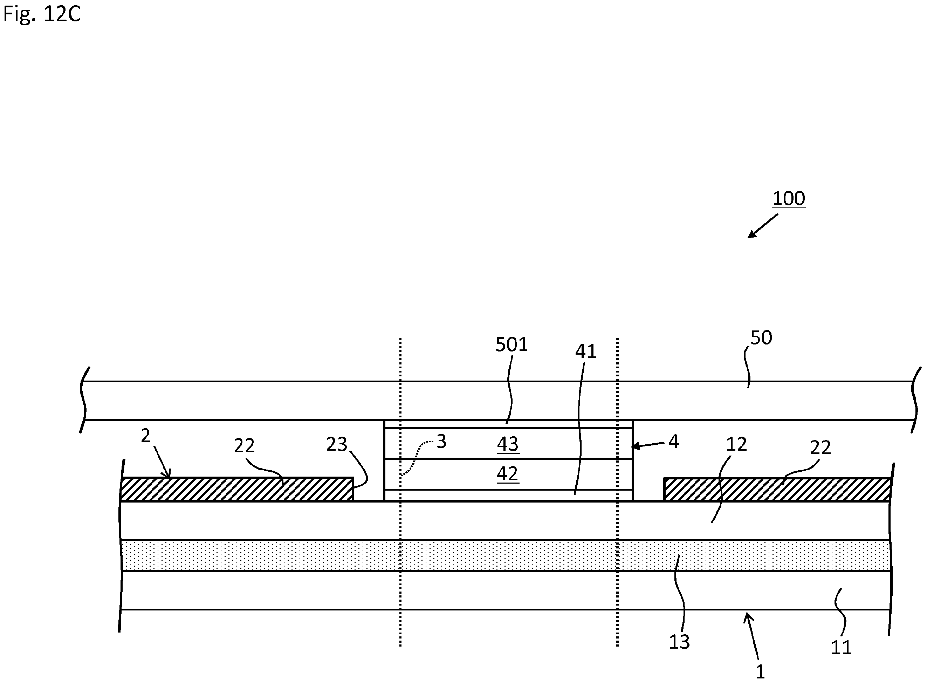

Next, in the third step, the antifog film 4 is attached to the vehicle interior side surface of the information acquisition region 3 via the adhesive layer 41 as shown in FIGS. 12B and 12C.

Specifically, first, the release sheet 51 is removed from the adhesive layer 41 as shown in FIG. 12B. At this time, the release sheet 51 can be easily removed using its portions extending from the antifog film 4 in plan view because the release sheet 51 has larger dimensions in plan view than the antifog film 4. In addition, the release sheet 51 is divided into the two sheet pieces 510 and portions of the adhesive layer 41 can be exposed in order, and therefore the antifog film 4 can be easily attached to the vehicle interior side surface of the information acquisition region 3. Furthermore, the release sheet 51 can be configured such that the release sheet is divided into the two sheet pieces 510 and has a silicone layer on the front surface. For these reasons, the shear force that acts on the adhesive layer 41 when the release sheet 51 is removed can be reduced to keep the thickness of the adhesive layer 41 from becoming uneven.

After the release sheet 51 is removed, the antifog film 4 is attached to the vehicle interior side surface of the information acquisition region 3 in a state where the protective film 50 remains attached to the antifog layer 43 as shown in FIG. 12C. For example, the antifog film 4 is held such that the adhesive layer 41 side surface faces the glass plate 1. Then, the antifog film 4 is pressed against the vehicle interior side surface of the information acquisition region 3 via the protective film 50 using a tool such as a squeegee. Thus, the antifog film 4 can be attached to the vehicle interior side surface of the information acquisition region 3.

The thickness D4 of the protective film 50 is larger than the thickness D1 of the film substrate 42. Therefore, even if the thickness D1 of the film substrate 42 is reduced, the rigidity of the antifog film 4 can be increased with the protective film 50. As a result, the antifog film 4 can be kept from largely warping when it is held. That is, the antifog film 4 can be kept from largely deforming when it is to be attached, and accordingly the antifog film 4 can be easily attached to the information acquisition region 3.

Furthermore, in this embodiment, the thickness D2 of the adhesive layer 41 can be set to no greater than 100 µm, the loss tangent tanδ of dynamic viscoelasticity of the adhesive layer 41 at 25°C can be set to no greater than 0.5, and a substance that has a molecular weight of greater than a million can be included in the adhesive layer 41. It is possible to thus keep the adhesive layer 41 from largely plastically deforming when the above-described release sheet 51 is removed and when the antifog film 4 is pressed against the glass plate 1 using a tool such as a squeegee. Therefore, in this embodiment, the thickness of the adhesive layer 41 can be kept from becoming uneven in the third step.

Through the above steps, it is possible to manufacture a windshield 100 illustrated in FIG. 12C including the antifog film 4 attached to the vehicle interior side surface of the information acquisition region 3 and the protective film 50 attached to the antifog layer 43 of the antifog film 4. The windshield 100 may be shipped in this state or any state described below.

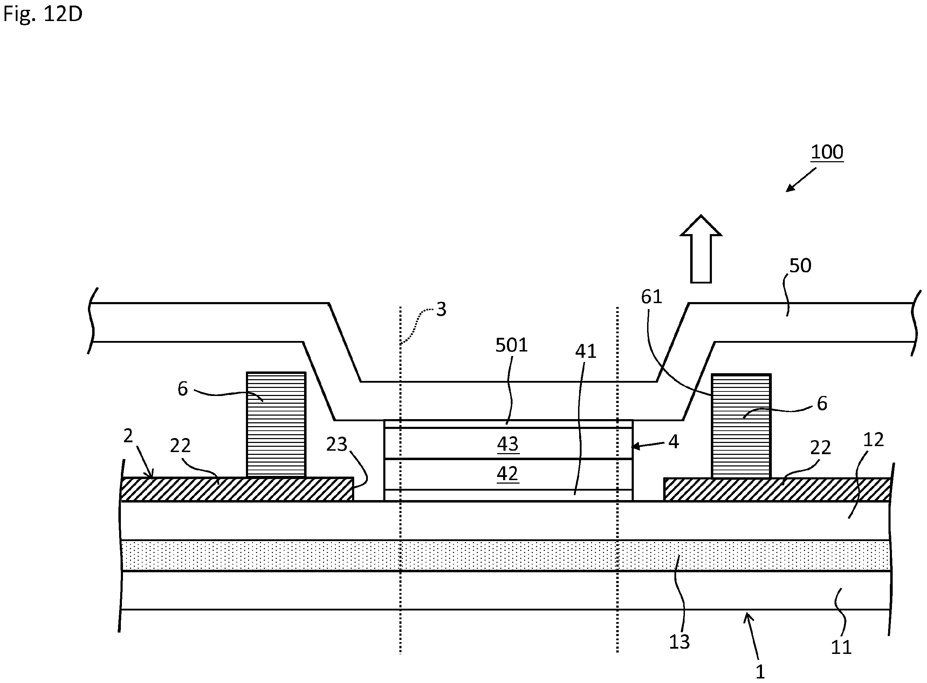

Next, the bracket 6 for attaching the cover 7 is prepared. Then, as shown in FIG. 12D, the prepared bracket 6 is arranged around the opening 23 of the blocking layer 2, and is fixed with the adhesive 64 and the double sided tape 65 such that at least a portion of the bracket is shielded by the blocking layer 2. It should be noted that in the example shown in FIG. 12D, dimensions of the protective film 50 in plan view are larger than dimensions of the bracket 6 in plan view. Therefore, portions of the protective film 50 to which the antifog film 4 is not attached are slightly bent and the bent portions are passed through the attachment opening 61. Thus, portions of the protective film 50 extending from the bent portions can be placed above the bracket 6 and the bracket 6 can be fixed to the protruding portion 22 without interference by the protective film 50.

### Fourth step

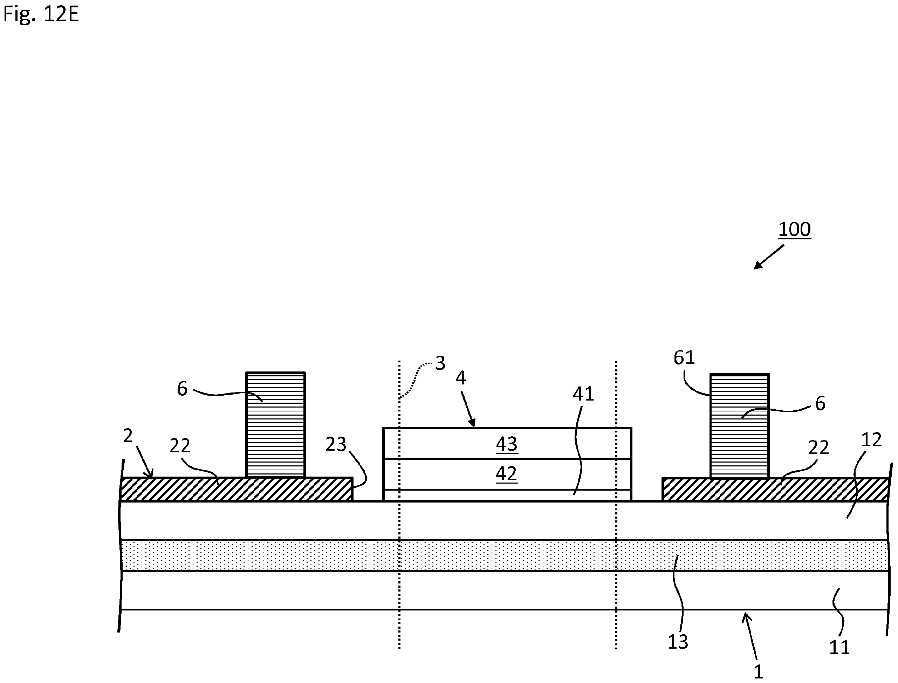

Next, after the above-described third step, the protective film 50 is removed from the antifog film 4 in the fourth step as shown in FIGS. 12D and 12E. Since the dimensions of the protective film 50 in plan view are larger than dimensions of the antifog film 4 in plan view, the protective film 50 can be easily removed from the antifog film 4 by pulling a portion of the protective film 50 to which the antifog film 4 is not attached. Also, the protective film 50 is attached to the antifog layer 43 via the slightly adhesive layer 501, and accordingly the gluing agent constituting the slightly adhesive layer 501 can be kept from remaining on the antifog layer 43 as much as possible after the protective film 50 is removed. Furthermore, in this embodiment, the film substrate 42 can be formed using a resin material that has affinity to the resin material contained in the antifog layer 43. In this case, the film substrate 42 and the antifog layer 43 can be firmly bonded together to keep the antifog layer 43 from separating from the film substrate 42 when the protective film 50 is removed.

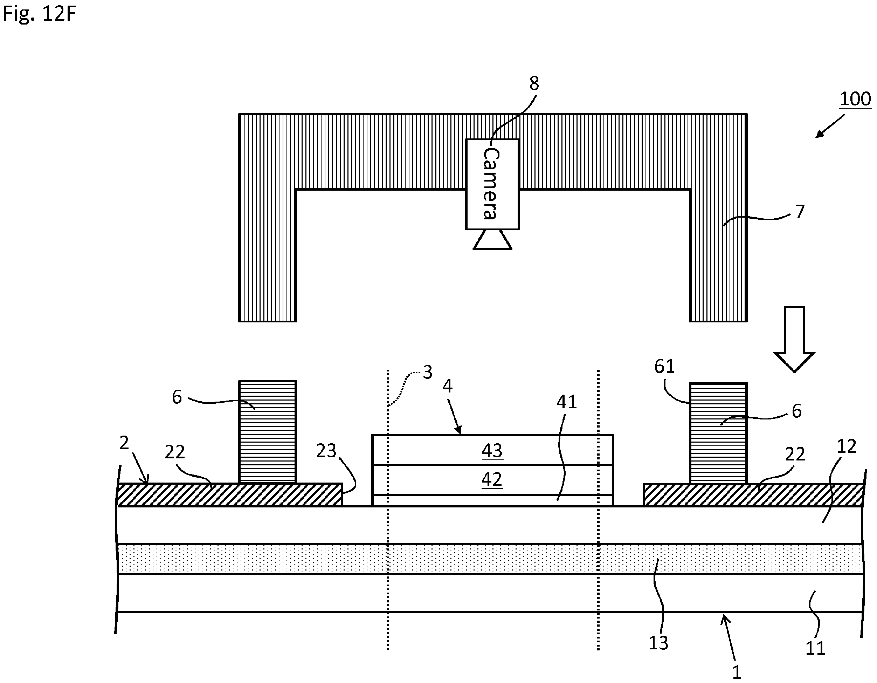

After the protective film 50 is removed, the cover 7 holding the camera 8 is attached to the bracket 6 as shown in FIG. 12F. Thus, the windshield 100 illustrated in FIG. 7 can be manufactured. It should be noted that the manufactured windshield 100 is attached to a front window portion of an automobile at a predetermined attachment angle θ relative to the horizontal direction as shown in FIG. 2. The attachment angle θ of the windshield 100 can be set to no greater than 45°, and no greater than 30°.

### §3 Features

As described above, the path of light passing through the film substrate 42 can be shortened in this embodiment by setting the thickness D1 of the film substrate 42 to no greater than 100 µm (preferably no greater than 50 µm). Therefore, even if the antifog film 4 is distorted when it is attached to the glass plate 1 as a result of surfaces of the glass plate 1 not being parallel as illustrated in FIG. 3A or irregularities being formed in the antifog film 4 as illustrated in FIG. 3B, the amount of light refraction caused by distortion of the antifog film 4 can be reduced. As a result, perspective distortion that may occur in the glass plate 1 to which the antifog film 4 is attached can be suppressed according to this embodiment.

It should be noted that the higher the rigidity of the antifog film is, the easier it is to hold the antifog film and attach the antifog film to the glass plate. From this viewpoint, it is preferable that the film substrate is thick. However, the thickness D1 of the film substrate 42 is reduced in this embodiment to suppress perspective distortion that may occur in a portion where the antifog film 4 is attached. The protective film 50 solves the problem that the reduction in the thickness D1 of the film substrate 42 reduces the rigidity of the antifog film 4 and makes it difficult to attach the antifog film 4 to the glass plate 1. That is, the protective film is to be disposed of, and therefore it is generally preferable that the protective film is thin. However, in this embodiment, the thickness D4 of the protective film 50 is set larger than the thickness D1 of the film substrate 42 and, in the above-described third step, the antifog film 4 is attached to the glass plate 1 after the release sheet 51 is removed with the protective film 50 remaining attached. Thus, the rigidity of the antifog film 4 can be increased by the relatively thick protective film 50 and the antifog film 4 can be easily attached to the glass plate 1 even if the thickness D1 of the film substrate 42 is small. Therefore, the antifog film 4 can be kept from being distorted when it is attached and consequently perspective distortion that may occur in a portion where the antifog film 4 is attached can be suppressed.

In this embodiment, the antifog layer 43 can be formed by applying a coating solution onto the film substrate 42 and drying the applied coating solution. However, in this case, internal stress may be generated when a solvent contained in the coating solution evaporates and the film substrate 42 may curl. In particular, the thickness D1 of the film substrate 42 is small, and accordingly the film substrate 42 is likely to curl because of the internal stress. However, in this embodiment, the antifog film 4 is attached to the glass plate 1 with the protective film 50 remaining attached. Accordingly, the protective film 50 can keep the film substrate 42 from curling when the release sheet 51 is removed to attach the antifog film 4 to the glass plate 1. Therefore, according to this embodiment, the antifog film 4 can be kept from being distorted when it is attached and consequently perspective distortion that may occur in a portion where the antifog film 4 is attached can be suppressed.

Further, in this embodiment, the adhesive layer 41 can be kept from largely plastically deforming in the above-described third step as a result of the thickness D2 of the adhesive layer 41 being set to no greater than 100 µm, the loss tangent tanδ of dynamic viscoelasticity of the adhesive layer 41 at 25°C being set to no greater than 0.5, and a substance that has a molecular weight of greater than a million being contained in the adhesive layer 41. Accordingly, in this embodiment, the thickness of the adhesive layer 41 can be kept from becoming uneven to prevent large distortion of the antifog film 4 attached to the glass plate 1. Therefore, according to this embodiment, perspective distortion that may occur in a portion where the antifog film 4 is attached can be suppressed.

Further, in this embodiment, the release sheet 51 is divided into the two sheet pieces 510 and may have a silicone layer on the front surface. For these reasons, the shear force that acts on the adhesive layer 41 when the release sheet 51 is removed in the above-described third step can be reduced to keep the thickness of the adhesive layer 41 from becoming uneven. Therefore, according to this embodiment, the antifog film 4 attached to the glass plate 1 can be kept from being largely distorted and, consequently, perspective distortion that may occur in a portion where the antifog film 4 is attached can be suppressed.

In this embodiment, dimensions of the protective film 50 in plan view and dimensions of the release sheet 51 in plan view are larger than dimensions of the antifog film 4 in plan view. This facilitates removal of the protective film 50 and the release sheet 51 in the above-described third and fourth steps. Therefore, according to this embodiment, workability can be enhanced when the protective film 50 and the release sheet 51 are removed in the third and fourth steps.

Furthermore, in this embodiment, the film substrate 42 can be formed using a resin material that has affinity to the resin material contained in the antifog layer 43. In this case, the film substrate 42 and the antifog layer 43 can be firmly bonded together to keep the antifog layer 43 from separating from the film substrate 42 when the protective film 50 is removed in the above-described fourth step or due to aging or the like.

In this embodiment, the glass plate 1 is curved in a direction orthogonal to its surface such that the first surface outwardly protrudes and the fourth surface is recessed, and the antifog film 4 is attached to the recessed fourth surface. Additionally, the windshield 100 is attached at an attachment angle of no greater than 45° relative to the horizontal direction. Further, the camera 8 is disposed such that the distance S from the vehicle interior side surface of the information acquisition region 3 to which the antifog film 4 is attached is no greater than 300 mm. Under these conditions, distortion of the antifog film 4 is likely to affect the camera, and severe perspective distortion that hinders shooting by the camera 8 is likely to occur in a portion where the antifog film 4 is attached. In particular, if the camera 8 is disposed such that the distance S is no greater than 200 mm or no greater than 100 mm, shooting by the camera may be largely affected by perspective distortion occurring in the portion where the antifog film 4 is attached. However, in this embodiment, the thickness D1 of the film substrate 42 is reduced to reduce the influence of distortion of the antifog film 4, and the adhesive layer 41, the release sheet 51, and the like are configured to prevent distortion of the antifog film 4. Thus, severe perspective distortion that hinders shooting by the camera 8 is prevented in the portion where the antifog film 4 is attached. That is, various measures employed in this embodiment to suppress perspective distortion exhibit excellent effects in a configuration that employs any of the above conditions under which distortion of the antifog film 4 is likely to affect the camera.

It should be noted that, in this embodiment, it is possible to make the antifog film 4 unlikely to peel off from the recessed fourth surface by setting the adhesiveness of the adhesive layer 41 to at least 0.1 N when measured using the test method specified in JIS Z 0237 (a glass plate is used as a test plate, instead of a stainless steel plate). Further, if the adhesiveness of the adhesive layer 41 measured using the above-described test method is set to no greater than 50 N, the shear force that acts on the adhesive layer 41 when the release sheet 51 is removed from the adhesive layer 41 in the above-described third step can be reduced to keep the thickness of the adhesive layer 41 from becoming uneven. Therefore, in this respect as well, perspective distortion that may occur in a portion where the antifog film 4 is attached can be suppressed according to this embodiment.

### §4 Variations

Although one embodiment of the present invention has been described in detail, the foregoing description is merely an example of the present invention in all aspects. It goes without saying that various modifications and alterations can be made without departing from the scope of the present invention. For example, constituent elements of the above-described antifog film 4, protective film 50, release sheet 51, and windshield 100 can be omitted, replaced, or added as appropriate according to the embodiment. Also, the shape and size of constituent elements of the above-described antifog film 4, protective film 50, release sheet 51, and windshield 100 can be determined as appropriate according to the embodiment. For example, the following changes can be made. It should be noted that variations described below can be combined as appropriate. In the following description, constituent elements that are similar to those in the above embodiment are denoted with the same reference signs as those used in the above embodiment, and a description of matter similar to that in the above embodiment is omitted as appropriate.

### 4.1

The glass plate 1 of the windshield 100 according to the above embodiment is configured as a laminated glass obtained by bonding together the outer glass plate 11 and the inner glass plate 12 with the interlayer 13 interposed therebetween. However, the type of the glass plate 1 need not be limited to this example and may be selected as appropriate according to the embodiment. The glass plate 1 may be constituted by a single glass plate, for example. In the above embodiment, the glass plate 1 has a substantially trapezoidal shape. However, the shape of the glass plate 1 need not be limited to this example and may be selected as appropriate according to the embodiment. In the above embodiment, the glass plate 1 is curved in a direction orthogonal to its surface. However, the glass plate 1 may be flat.

In the above embodiment, the glass plate 1 is molded into the curved shape under its own weight. However, the method for molding the glass plate 1 need not be limited to this example and may be selected as appropriate according to the embodiment. For example, the glass plate 1 may be molded into the curved shape using known press molding.

### 4.2

In the above embodiment, the camera 8 is used as the information acquisition device. However, the information acquisition device need not be limited to this example and may be selected as appropriate according to the embodiment so long as the information acquisition device is capable of acquiring information from the outside of the vehicle by emitting and/or receiving light. The number of information acquisition devices disposed inside the vehicle need not be limited to one and may be selected as appropriate according to the embodiment. The information acquisition device may be, for example, a visible light and/or infrared rays camera for measuring a distance between vehicles, a light receiving device that receives signals from the outside of the vehicle such as an optical beacon, a camera using visible light and/or infrared rays that reads white lines on the road or the like as images, or a stereo camera that can identify the position of a subject through stereoscopic vision.

### 4.3

In the above embodiment, the bracket 6 has the shape of a frame and the cover 7 has a rectangular shape so that the cover can be attached to the bracket 6. However, the shapes of the bracket 6 and the cover 7 need not be limited to these examples and may be selected as appropriate according to the embodiment so long as the bracket and the cover can be fixed to the blocking layer 2 while supporting the information acquisition device. Also, the bracket 6 may have a plurality of openings corresponding to a plurality of information acquisition devices. Alternatively, a plurality of pairs of the bracket 6 and the cover 7 may be prepared for attaching a plurality of information acquisition devices to the windshield 100 and the prepared pairs of the bracket 6 and the cover 7 may be attached to the glass plate 1.

### 4.4

In the above embodiment, the layer structure of the blocking layer 2 differs between the upper region 221 and the lower region 222. However, the blocking layer 2 need not be limited to this example and the regions may have the same layer structure.

In the above embodiment, the blocking layer 2 is provided along the peripheral portion of the glass plate 1. This blocking layer 2 may be omitted. The shape of the blocking layer 2 need not be limited to that illustrated in FIG. 1 and may be selected as appropriate according to the embodiment.

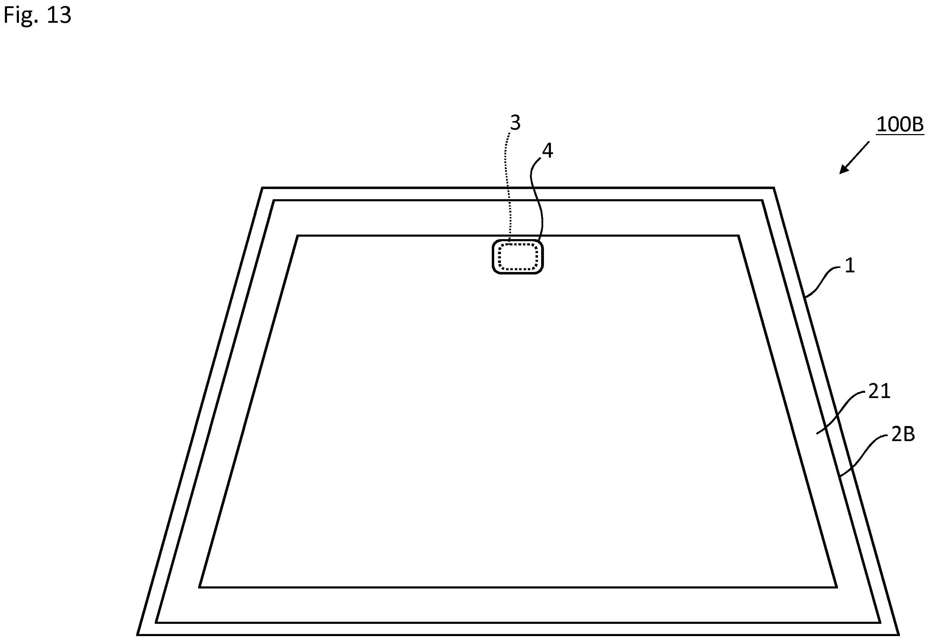

The information acquisition region 3 may be arranged adjacent to the blocking layer 2 as illustrated in FIG. 13, for example, rather than being surrounded by the blocking layer 2. FIG. 13 illustrates a windshield 100B according to this variation. In the windshield 100B illustrated in FIG. 13, a blocking layer 2B does not include the protruding portion 22 and the opening 23, and the information acquisition region 3 is located slightly below the center of an upper side portion of the blocking layer 2B (peripheral portion 21). Like this example, the information acquisition region 3 may be arranged such that at least one side is adjacent to the blocking layer 2.

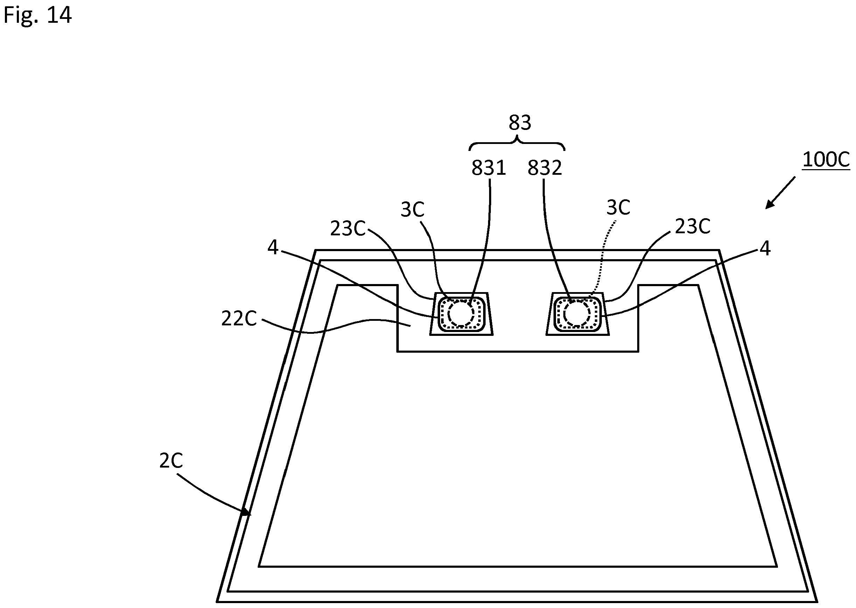

If a stereo camera is disposed as the information acquisition device inside the vehicle, for example, a plurality of information acquisition regions 3 and a plurality of openings 23 may be provided as illustrated in FIG. 14. FIG. 14 illustrates a windshield 100C to which a stereo camera 83 that includes two cameras (831 and 832) can be attached. In the windshield 100C illustrated in FIG. 14, a blocking layer 2C includes a protruding portion 22C that is slightly elongated in the left-right direction. Openings 23C are provided in the protruding portion 22C at positions corresponding to the cameras (831 and 832) of the stereo camera 83. Thus, information acquisition regions 3C are appropriately set within the openings 23C. In this case, antifog films 4 may be attached separately to the two information acquisition regions 3C as shown in FIG. 14.

### 4.5

In the above embodiment, dimensions of the antifog film 4 in plan view are smaller than dimensions of the opening 23 of the blocking layer 2 in plan view. However, the dimensions of the antifog film 4 in plan view need not be limited as such and may be larger than the dimensions of the opening 23 in plan view.

In the above embodiment, the antifog film 4 has a rectangular shape in plan view and all the corner portions are rounded. However, the shape of the antifog film 4 is not limited as such and may be selected as appropriate according to the embodiment. Similarly, in the above embodiment, the information acquisition region 3 and the opening 23 have rectangular shapes . However, the shapes are not limited to this example and the shape of the information acquisition region 3 may be set as appropriate according to the information acquisition device to be used and the shape of the opening 23 may be determined as appropriate such that the information acquisition device can acquire information regarding the outside of the vehicle. For example, the opening 23 may have a circular shape, an elliptical shape, an eye shape, or a trapezoidal shape. According to the shape of the opening, the antifog film 4 may also have a circular shape, an elliptical shape, an eye shape, or a trapezoidal shape.

The above embodiment is described regarding a case where the antifog film 4 is attached to the information acquisition region 3 of the glass plate 1 that is used as the windshield 100. However, perspective distortion may occur in a portion where the antifog film 4 is attached not only in such a case. Therefore, the above-described antifog film 4 may be used in a region of the above-described windshield 100 other than the information acquisition region 3, in a glass plate for automobiles other than the above-described windshield 100, or in various glass plates other than glass plates for automobiles . For example, the above-described antifog film 4 may be used for a rear glass plate of an automobile, an architectural glass plate, a glass plate for display, or a glass lens or the like of an imaging device such as a security camera. For example, in an automobile that includes an information acquisition device that acquires information from the rear side of the automobile, the above-described antifog film 4 may be used at a position on a rear glass plate of the automobile located opposite to the information acquisition device. Alternatively, the above-described antifog film 4 may be used for side glass plates of an automobile at positions between the driver and left and right side mirrors. The above-described antifog film 4 may be directly attached in front of various cameras provided inside an automobile, or on a room mirror or a side mirror, for example, other than glass plates of an automobile. The shape of the antifog film 4 and its dimensions in plan view may be determined as appropriate according to a region where the antifog film 4 is attached.

### 4.6

In the above embodiment, the release sheet 51 is attached to the adhesive layer 41. This release sheet 51 may be omitted.

In the above embodiment, dimensions of the release sheet 51 in plan view are larger than dimensions of the antifog film 4 in plan view. However, the dimensions of the release sheet 51 in plan view need not be limited as such and may be set as appropriate according to the embodiment. For example, the dimensions of the release sheet 51 in plan view may be substantially the same as the dimensions of the antifog film 4 in plan view.

In the above embodiment, the release sheet 51 is divided into the two sheet pieces 510. However, the release sheet 51 does not have to have such a configuration, and may be divided into three or more sheet pieces or may be formed as a single sheet piece. In the example shown in FIG. 6, the slit 511 is provided at the center in the left-right direction. However, the position of the slit 511 need not be limited to this example, and the slit 511 may be provided at a position displaced from the center in any direction.

### 4.7

In the above embodiment, the protective film 50 is attached to the antifog layer 43. This protective film 50 may be omitted.

In the above embodiment, dimensions of the protective film 50 in plan view are larger than dimensions of the antifog film 4 in plan view. However, the dimensions of the protective film 50 in plan view need not be limited as such and may be set as appropriate according to the embodiment. For example, the dimensions of the protective film 50 in plan view may be substantially the same as the dimensions of the antifog film 4 in plan view.

In the above embodiment, the thickness D4 of the protective film 50 is larger than the thickness D1 of the film substrate 42. However, the thickness D4 of the protective film 50 need not be limited as such and may be smaller than the thickness D1 of the film substrate 42.

In the above embodiment, the protective film 50 is arranged to extend above the bracket 6. However, the arrangement of the protective film 50 need not be limited to this example. For example, if there is a space between the bracket 6 and the glass plate 1 (blocking layer 2), the protective film 50 may be arranged to pass through this space.

### 4.8

In the above embodiment, the windshield 100 can be attached at an attachment angle of no greater than 45° relative to the horizontal direction, and the camera 8 is disposed within a distance of 300 mm from the vehicle interior side surface of the information acquisition region 3. However, the attachment angle θ of the windshield 100 and the arrangement of the camera 8 need not be limited to this example and may be determined as appropriate according to the embodiment.

### 4.9

In the above embodiment, the influence of distortion of the antifog film 4 is reduced and perspective distortion that may occur in a portion where the antifog film 4 is attached is suppressed by setting the thickness of the film substrate 42 to no greater than 100 µm to shorten the path of light passing through the film substrate 42. However, as described above, perspective distortion that may occur in a portion where the antifog film 4 is attached can also be suppressed by (a) setting the thickness of the adhesive layer 41 to no greater than 100 µm, (b) setting the loss tangent tanδ of dynamic viscoelasticity of the adhesive layer 41 at 25°C to no greater than 0.5, (c) including a substance that has a molecular weight of greater than a million in the adhesive layer 41, (d) setting the thickness D4 of the protective film 50 larger than the thickness D1 of the film substrate 42, (e) providing a silicone layer on the front surface of the release sheet 51, (f) dividing the release sheet 51 into a plurality of sheet pieces, or (g) setting the adhesiveness of the adhesive layer of the antifog film measured using the test method specified in JIS Z 0237 to 0.1 to 50 N if the antifog film is attached to a recessed surface of a glass plate that is curved such that one surface protrudes outward and the other surface is recessed. Therefore, in order to suppress perspective distortion that may occur in a portion where the antifog film 4 is attached, any one or a combination of two or more of the above configurations (a) to (g) may be employed without setting the thickness of the film substrate 42 to no greater than 100 µm, in other words, with the thickness of the film substrate 42 being set to greater than 100 µm. Further, the antifog film 4 can be used independently for a glass plate of an automobile such as the above-described windshield 100.

### 4.10

If it is desired to solve the problem that the antifog layer 43 separates from the film substrate 42 rather than suppressing perspective distortion that may occur in a portion where the antifog film 4 is attached, the antifog film 4 and the windshield 100 may be configured by forming the film substrate 42 using a resin material that has affinity to a resin material contained in the antifog layer 43 without setting the thickness of the film substrate 42 to no greater than 100 µm and without employing all or at least some of the above configurations (a) to (g).

### List of Reference Numerals

100 ... Windshield
1 ... Glass plate
11 ... Outer glass plate, 12 ... Inner glass plate, 13 ... Interlayer
2 ... Blocking layer
21 ... Peripheral portion, 22 ... Protruding portion, 23 ... Opening
3 ... Information acquisition region
4 ... Antifog film
41 ... Adhesive layer, 42 ... Film substrate, 43 ... Antifog layer
50 ... Protective film, 501 ... Slightly adhesive layer
51 ... Release sheet, 510 ... Sheet piece, 511 ... Slit
6 ... Bracket
61 ... Attachment opening, 62 ... Main body portion, 63 ... Support portion
64 ... Adhesive, 65 ... Double sided tape
7 ... Cover
71 ... Recess, 72 ... Wall surface, 73 ... Lens
8 ... Camera (information acquisition device)

## Claims

1. A method for manufacturing a glass plate, comprising:
a first step of preparing a glass plate;
a second step of preparing an antifog film that includes a film substrate having a thickness of no greater than 100 µm, an antifog layer having antifog properties and layered on one surface of the film substrate, and an adhesive layer layered on another surface of the film substrate; and
a third step of attaching the antifog film to the glass plate via the adhesive layer.

2. The method for manufacturing a glass plate according to claim 1,
wherein the thickness of the film substrate is no greater than 50 µm.

3. The method for manufacturing a glass plate according to claim 1 or 2,
wherein the adhesive layer has a thickness of no greater than 100 µm.

4. The method for manufacturing a glass plate according to any one of claims 1 to 3,
wherein a loss tangent tanδ of dynamic viscoelasticity of the adhesive layer at 25°C is no greater than 0.5.

5. The method for manufacturing a glass plate according to any one of claims 1 to 3,
wherein a loss tangent tanδ of dynamic viscoelasticity of the adhesive layer at 25°C is greater than 0.5.

6. The method for manufacturing a glass plate according to any one of claims 1 to 5,
wherein the adhesive layer contains a substance that has a molecular weight of no greater than a million.

7. The method for manufacturing a glass plate according to any one of claims 1 to 6,
wherein a release sheet is attached to the adhesive layer,
a protective film is attached to the antifog layer, and
in the third step, the antifog film is attached to the glass plate after the release sheet is removed from the adhesive layer with the protective film remaining attached to the antifog layer.

8. The method for manufacturing a glass plate according to claim 7,
wherein the protective film has a larger thickness than the film substrate has, and
the method further comprises a fourth step of removing the protective film after the third step.

9. The method for manufacturing a glass plate according to claim 7 or 8,
wherein dimensions of the protective film in plan view are larger than dimensions of the antifog film in plan view.

10. The method for manufacturing a glass plate according to any one of claims 7 to 9,
wherein dimensions of the release sheet in plan view are larger than dimensions of the antifog film in plan view.

11. The method for manufacturing a glass plate according to any one of claims 7 to 10,
wherein the release sheet has a silicone layer on a front surface thereof.

12. The method for manufacturing a glass plate according to any one of claims 7 to 11,
wherein the release sheet is divided into a plurality of sheet pieces.

13. The method for manufacturing a glass plate according to any one of claims 1 to 12,
wherein at least a portion of the glass plate is curved in a direction orthogonal to a surface of the glass plate such that one surface of the glass plate protrudes outward and another surface of the glass plate is recessed and the antifog film is attached to the recessed surface of the glass plate in the portion, and
in the third step, the antifog film is attached to the recessed surface of the glass plate.

14. The method for manufacturing a glass plate according to claim 13,
wherein the adhesive layer has an adhesiveness of 0.1 to 50 N when measured using a test method specified in JIS Z 0237.

15. The method for manufacturing a glass plate according to any one of claims 1 to 14,
wherein the glass plate is used as a windshield for automobiles and is attached at an attachment angle of no greater than 45° relative to a horizontal direction.

16. The method for manufacturing a glass plate according to claim 15,
wherein the glass plate includes an information acquisition region that is located opposite to an information acquisition device for acquiring information from the outside of a vehicle by emitting and/or receiving light, and through which the light passes,
the information acquisition device is disposed within a distance of 300 mm from the information acquisition region, and
in the third step, the antifog film is attached to a vehicle interior side surface of the information acquisition region.

17. A glass plate for automobiles, comprising:
a glass plate; and
an antifog film that includes a film substrate having a thickness of no greater than 100 µm, an antifog layer having antifog properties and layered on one surface of the film substrate, and an adhesive layer layered on another surface of the film substrate, the antifog film being attached to the glass plate via the adhesive layer.

18. The glass plate for automobiles according to claim 17,
wherein the thickness of the film substrate is no greater than 50 µm.

19. The glass plate for automobiles according to claim 17 or 18,
wherein the adhesive layer has a thickness of no greater than 100 µm.

20. The glass plate for automobiles according to any one of claims 17 to 19,
wherein a loss tangent tanδ of dynamic viscoelasticity of the adhesive layer at 25°C is no greater than 0.5.

21. The glass plate for automobiles according to any one of claims 17 to 19,
wherein a loss tangent tanδ of dynamic viscoelasticity of the adhesive layer at 25°C is greater than 0.5.

22. The glass plate for automobiles according to any one of claims 17 to 21,
wherein the adhesive layer contains a substance that has a molecular weight of no greater than a million.

23. The glass plate for automobiles according to any one of claims 17 to 22,
wherein a protective film is attached to the antifog layer.

24. The glass plate for automobiles according to claim 23,
wherein the protective film has a larger thickness than the film substrate has.

25. The glass plate for automobiles according to claim 23 or 24,
wherein dimensions of the protective film in plan view are larger than dimensions of the antifog film in plan view.

26. The glass plate for automobiles according to any one of claims 17 to 25,
wherein the glass plate is curved in a direction orthogonal to a surface of the glass plate such that one surface of the glass plate protrudes outward and another surface of the glass plate is recessed, and
the antifog film is attached to the recessed surface of the glass plate.

27. The glass plate for automobiles according to claim 26, wherein the adhesive layer has an adhesiveness of 0.1 to 50 N when measured using a test method specified in JIS Z 0237.

28. The glass plate for automobiles according to any one of claims 17 to 27,
wherein the glass plate is attached at an attachment angle of no greater than 45° relative to a horizontal direction.

29. The glass plate for automobiles according to any one of claims 17 to 28,
wherein the glass plate includes an information acquisition region that is located opposite to an information acquisition device for acquiring information from the outside of a vehicle by emitting and/or receiving light, and through which the light passes,
the information acquisition device is disposed within a distance of 300 mm from the information acquisition region, and
the antifog film is attached to a vehicle interior side surface of the information acquisition region.

30. A glass plate for automobiles, comprising:
a glass plate; and
an antifog film that includes a film substrate, an antifog layer having antifog properties and layered on one surface of the film substrate, and an adhesive layer layered on another surface of the film substrate, the antifog film being attached to the glass plate via the adhesive layer,
wherein a protective film is attached to the antifog layer, and
the protective film has a larger thickness than the film substrate has.

31. The glass plate for automobiles according to claim 30,
wherein dimensions of the protective film in plan view are larger than dimensions of the antifog film in plan view.

32. A glass plate for automobiles, comprising:
a glass plate; and
an antifog film that includes a film substrate, an antifog layer having antifog properties and layered on one surface of the film substrate, and an adhesive layer layered on another surface of the film substrate, the antifog film being attached to the glass plate via the adhesive layer,
wherein the adhesive layer has a thickness of no greater than 100 µm.

33. The glass plate for automobiles according to claim 32,
wherein a loss tangent tanδ of dynamic viscoelasticity of the adhesive layer at 25°C is no greater than 0.5.

34. The glass plate for automobiles according to claim 32,
wherein a loss tangent tanδ of dynamic viscoelasticity of the adhesive layer at 25°C is greater than 0.5.

35. The glass plate for automobiles according to any one of claims 32 to 34,
wherein the adhesive layer contains a substance that has a molecular weight of no greater than a million.
